# EUROPEAN PATENT APPLICATION

(11) **EP 4 095 739 A1**
(43) Date of publication of application: **30.11.2022**
(21) Application number: 22175678.6
(22) Date of filing: 26.05.2022
(51) Int. Cl.: G06F 40/44, G06F 40/58, G10L 13/00, G10L 15/26

(54) **METHODS AND SYSTEMS FOR SPEECH-TO-SPEECH TRANSLATION**

(30) Priority: 29.05.2021 US 202163194982 P; 23.05.2022 US 202217750575
(71) Applicant: IMRSV Data Labs Inc., Ottawa, ON K2P 2G3 (CA)
(72) Inventor: GUNASEKARA, Isuru, Ottawa, ON K1R 5G9 (CA); GAGNE, Bradley Daniel, Ottawa, ON K2W 1A4 (CA); WITHERSPOON, Samuel, Ottawa, ON K1M 1B8 (CA); CHAUHAN, Abhijeet, Ottawa, ON K1R 5P5 (CA); WAN, Qianhui, Ottawa, ON K1R 0C5 (CA); KABIRI, Arman, Fredericton, NB E3B 9K2 (CA); MEZAOUI, Hichem, Ottawa, ON K1Y 4M2 (CA); MARUYA-LI, Keaton Satoshi Gee-Kea, Saint Laurent, QC H4M 2T4 (CA); KAPILA, Neha, Gloucester, ON K1T 0H3 (CA); OUYANG, Zhiheng, Ottawa, ON K1S 5M2 (CA); MacDONALD, Cole Malcolm, Orleans, ON K4A 0N8 (CA); SANCHEZ RAMIREZ, Alejandro, Ottawa, ON K2P 1B5 (CA)
(74) Representative: Lawrie IP Limited

(57) **Abstract**

There is provided a method of speech-to-speech translation including receiving at a mobile device input speech data associated with speech in a first language and converting the input speech data into input text data using a speech-to-text conversion engine (STT engine) onboard the mobile device. The method also includes translating the input text data to form a translated text data using a text-to-text translation engine (TTT engine) onboard the mobile device. The translated text data is associated with a second language. In addition, the method includes converting the translated text data into output speech data using a text-to-speech conversion engine (TTS engine) onboard the mobile device, and outputting at the mobile device a device output based on the output speech data. Mobile devices and computer-readable storage media for speech-to-speech translation are also provided.

## Description

### CROSS-REFERENCE TO RELATED APPLICATION

This application claims priority from United States Provisional Patent Application Number 63/194,982, filed on May 29, 2021, which is incorporated herein by reference in its entirety. This application also claims priority from United States Patent Application Number 17/750,575, filed on May 23, 2022, which is incorporated herein by reference in its entirety

### FIELD

The present specification relates to methods and systems for translation, and in particular to methods and systems for speech-to-speech translation.

### BACKGROUND

People in different regions of the globe speak and understand different languages. Due to this difference in languages, a first group of people conversant in a first language may not be able to communicate with a second group of people conversant in a second language. This language barrier to communication may pose challenges to understanding and cooperation between the first and second groups of people.

### SUMMARY

According to an implementation of the present specification there is provided a method of speech-to-speech translation comprising: receiving at a mobile device input speech data associated with speech in a first language; converting the input speech data into input text data using a speech-to-text conversion engine (STT engine) onboard the mobile device; translating the input text data to form a translated text data using a text-to-text translation engine (TTT engine) onboard the mobile device, the translated text data associated with a second language; converting the translated text data into output speech data using a text-to-speech conversion engine (TTS engine) onboard the mobile device; and outputting at the mobile device a device output based on the output speech data.

The method may further comprise: receiving at the mobile device an audio input corresponding to the speech in the first language; and converting, at the mobile device, the audio input into the input speech data.

The outputting the device output may comprise outputting an audio output at the mobile device, the audio output comprising corresponding speech in the second language associated with the output speech data.

The mobile device may comprise one of a smartphone, a tablet, and a wearable device.

The mobile device may comprise the smartphone being an Android^{™} Edge device.

The converting the input speech data into the input text data may comprise converting the input speech data into the input text data using the STT engine comprising: a Hybrid Deep Neural Network and a Hidden Markov Model with Time Delay Neural Network (TDNN) layers and bidirectional Long Short-Term Memory (LSTM) layers.

The translating may comprise translating the input text data to form the translated text data using the TTT engine comprising: a Transformers Encoder-Decoder machine translation model.

One of the first language and the second language may comprise Farsi and the other of the first language and the second language may comprise English; and the translating may comprise translating the input text data to form the translated text data using the Transformers Encoder-Decoder machine translation model comprising one or more of: a number of layers of 4, a dimension of attention model of 128, a dimension of feed forward layer of 1024, a number of attention heads of 16, and a dropout rate of 0.15.

One of the first language and the second language may comprise Levantine Arabic and the other of the first language and the second language may comprise English; and the translating may comprise translating the input text data to form the translated text data using the Transformers Encoder-Decoder machine translation model comprising one or more of: a number of layers of 4, a dimension of attention model of 128, a dimension of feed forward layer of 2048, a number of attention heads of 8, and a dropout rate of 0.15.

The translating may comprise translating the input text data to form the translated text data using the TTT engine comprising: the Transformers Encoder-Decoder machine translation model compressed using TFLite^{™} to form a compressed Transformers Encoder-Decoder machine translation model storable onboard the mobile device.

The converting the translated text data into the output speech data may comprise converting the translated text data into the output speech data using the TTS engine comprising: trained machine learning models comprising Tacotron2^{™} and Fastspeech2^{™}.

The method may further comprise: receiving user input at the mobile device in relation to one or more of the translated text data and the output speech data; and retraining one or more of the STT engine, the TTT engine, and the TTS engine based on the user input.

The translating may comprise: truecasing the input text data associated with a sentence using a truecasing engine (TC engine) onboard the mobile device; finding a proper noun in the sentence using a Name Entity Recognition engine (NER engine) onboard the mobile device; generating at the mobile device updated input text data associated with an updated sentence comprising a first token inserted into the sentence immediately before the proper noun and a second token inserted into the sentence immediately after the proper noun; translating the updated input text data to form intermediate translated text data using the TTT engine; determining whether a dictionary translation of the proper noun is stored onboard the mobile device; if the dictionary translation of the proper noun is stored onboard the mobile device: locating a machine translation of the proper noun in the intermediate translated text data based on the first token and the second token; comparing the dictionary translation of the proper noun with the machine translation of the proper noun; and if the dictionary translation is different from the machine translation, generating the translated text data by: replacing the machine translation with the dictionary translation in the intermediate text data; and removing the first token and the second token from the intermediate text data; if the dictionary translation is the same as the machine translation, generating the translated text data by: removing the first token and the second token from the intermediate text data; and if the dictionary translation of the proper noun is not stored onboard the mobile device: locating the machine translation of the proper noun in the intermediate translated text data based on the first token and the second token; generating a transliteration of the proper noun using a transliteration engine (TLT engine) onboard the mobile device; determining if the machine translation is to be replaced by the transliteration; if the machine translation is to be replaced by the transliteration, generating the translated text data by: replacing the machine translation with the transliteration in the intermediate text data; and removing the first token and the second token from the intermediate text data; and if the machine translation is not to be replaced by the transliteration, generating the translated text data by: removing the first token and the second token from the intermediate text data.

The generating the transliteration may comprise generating the transliteration using the TLT engine comprising one of: a Recurrent Neural Network with an attention mechanism; and a Transformers Encoder-Decoder machine transliteration model.

The determining if the machine translation is to be replaced by the transliteration may comprise: extracting at the mobile device one or more features associated with one or more of the machine translation and the transliteration; and determining if the machine translation is to be replaced by the transliteration using a selection engine (SEL engine) based on the one or more features, the SEL engine onboard the mobile device.

The determining if the machine translation is to be replaced by the transliteration may comprise determining if the machine translation is to be replaced by the transliteration using the SEL engine comprising a binary classifier receiving as input the one or more features.

The TTT engine may comprise one or more of the TC engine, the NER engine, the TLT engine, and the SEL engine.

The method may further comprise: adding punctuation to at least a portion of the input text data using a punctuator engine onboard the mobile device before the translating the input text data using the TTT engine.

The method may further comprise: checking the portion of the input text data for a sentence end punctuation; and translating a sentence corresponding to the sentence end punctuation using the TTT engine if the sentence end punctuation is found.

According to another implementation of the present specification there is provided a mobile device for speech-to-speech translation, the mobile device comprising: a memory module to store input speech data associated with speech in a first language; and a processor module in communication with the memory module, the processor module to: receive the input speech data; convert the input speech data into input text data using a speech-to-text conversion engine (STT engine) onboard the mobile device; translate the input text data to form a translated text data using a text-to-text translation engine (TTT engine) onboard the mobile device, the translated text data associated with a second language; convert the translated text data into output speech data using a text-to-speech conversion engine (TTS engine) onboard the mobile device; and output a device output based on the output speech data.

The mobile device may further comprise an audio input module to: receive an audio input corresponding to the speech in the first language; and convert the audio input into the input speech data.

The mobile device may further comprise an audio output module; wherein to output the device output the processor module may be to control the audio output module to generate an audio output comprising corresponding speech in the second language associated with the output speech data.

The mobile device may comprise one of a smartphone, a tablet, and a wearable device.

The mobile device may comprise the smartphone being an Android^{™} Edge device.

The STT engine may comprise: a Hybrid Deep Neural Network and a Hidden Markov Model with Time Delay Neural Network (TDNN) layers and bi-directional Long Short-Term Memory (LSTM) layers.

The TTT engine may comprise: a Transformers Encoder-Decoder machine translation model.

One of the first language and the second language may comprise Farsi and the other of the first language and the second language may comprise English; and the Transformers Encoder-Decoder machine translation model may comprise one or more of: a number of layers of 4, a dimension of attention model of 128, a dimension of feed forward layer of 1024, a number of attention heads of 16, and a dropout rate of 0.15.

One of the first language and the second language may comprise Levantine Arabic and the other of the first language and the second language may comprise English; and the Transformers Encoder-Decoder machine translation model may comprise one or more of: a number of layers of 4, a dimension of attention model of 128, a dimension of feed forward layer of 2048, a number of attention heads of 8, and a dropout rate of 0.15.

The TTT engine may comprise: the Transformers Encoder-Decoder machine translation model compressed using TFLite^{™} to form a compressed Transformers Encoder-Decoder machine translation model storable onboard the mobile device.

The TTS engine may comprise: trained machine learning models comprising Tacotron2^{™} and Fastspeech2^{™}.

The processor module may be further to: receive user input at the mobile device in relation to one or more of the translated text data and the output speech data; and send the user input to a retraining module to retrain one or more of the STT engine, the TTT engine, and the TTS engine based on the user input.

To translate the input text data the processor module may be to: truecase the input text data associated with a sentence using a truecasing engine (TC engine) onboard the mobile device; find a proper noun in the sentence using a Name Entity Recognition engine (NER engine) onboard the mobile device; generate updated input text data associated with an updated sentence comprising a first token inserted into the sentence immediately before the proper noun and a second token inserted into the sentence immediately after the proper noun; translate the updated input text data to form intermediate translated text data using the TTT engine; determine whether a dictionary translation of the proper noun is stored onboard the mobile device; if the dictionary translation of the proper noun is stored onboard the mobile device: locate a machine translation of the proper noun in the intermediate translated text data based on the first token and the second token; compare the dictionary translation of the proper noun with the machine translation of the proper noun; and if the dictionary translation is different from the machine translation, generate the translated text data by: replacing the machine translation with the dictionary translation in the intermediate text data; and removing the first token and the second token from the intermediate text data; if the dictionary translation is the same as the machine translation, generate the translated text data by: removing the first token and the second token from the intermediate text data; and if the dictionary translation of the proper noun is not stored onboard the mobile device: locate the machine translation of the proper noun in the intermediate translated text data based on the first token and the second token; generate a transliteration of the proper noun using a transliteration engine (TLT engine) onboard the mobile device; determine if the machine translation is to be replaced by the transliteration; if the machine translation is to be replaced by the transliteration, generate the translated text data by: replacing the machine translation with the transliteration in the intermediate text data; and removing the first token and the second token from the intermediate text data; and if the machine translation is not to be replaced by the transliteration, generate the translated text data by: removing the first token and the second token from the intermediate text data.

The TLT engine may comprise one of: a Recurrent Neural Network with an attention mechanism; and a Transformers Encoder-Decoder machine transliteration model.

To determine if the machine translation is to be replaced by the transliteration the processor module may be to: extract one or more features associated with one or more of the machine translation and the transliteration; and determine if the machine translation is to be replaced by the transliteration using a selection engine (SEL engine) based on the one or more features, the SEL engine onboard the mobile device.

The SEL engine may comprise a binary classifier, the binary classifier to receive as input the one or more features.

The TTT engine may comprise one or more of the TC engine, the NER engine, the TLT engine, and the SEL engine.

The processor module may be further to: add punctuation to at least a portion of the input text data using a punctuator engine onboard the mobile device before the translating the input text data using the TTT engine.

The processor module may be further to: check the portion of the input text data for a sentence end punctuation; and translate a sentence corresponding to the sentence end punctuation using the TTT engine if the sentence end punctuation is found.

According to yet another implementation of the present specification there is provided a non-transitory computer-readable storage medium comprising instructions executable by a processor, the instructions to cause the processor to perform the methods described herein.

### BRIEF DESCRIPTION OF THE DRAWINGS

In the drawings, identical reference numbers identify similar elements or acts. The sizes and relative positions of elements in the drawings are not necessarily drawn to scale. For example, the shapes of various elements and angles are not necessarily drawn to scale, and some of these elements may be arbitrarily enlarged and positioned to improve drawing legibility. Further, the particular shapes of the elements as drawn are not necessarily intended to convey any information regarding the actual shape of the particular elements, and have been solely selected for ease of recognition in the drawings.
Fig. 1 shows a flowchart of an example method for speech-to-speech translation, in accordance with a non-limiting implementation of the present specification.
Fig. 2 shows a schematic representation of an example mobile device, in accordance with a non-limiting implementation of the present specification.
Fig. 3A shows a schematic representation of another example mobile device, in accordance with a non-limiting implementation of the present specification.
Fig. 3B shows a schematic representation of yet another example mobile device, in accordance with a non-limiting implementation of the present specification.
Fig. 3C shows a schematic representation of yet another example mobile device, in accordance with a non-limiting implementation of the present specification.
Fig. 4A shows a schematic representation of an example a Hybrid Deep Neural Network-Hidden Markov Model (DNN-HMM) based acoustic model, in accordance with a non-limiting implementation of the present specification.
Fig. 4B shows a schematic representation of an example Transformers Encoder-Decoder machine learning model, in accordance with a non-limiting implementation of the present specification.
Fig. 4C shows a schematic representation of an example Fastspeech2^{™} model, in accordance with a non-limiting implementation of the present specification.
Fig. 4D shows a schematic representation of an example a Tacotron2^{™} model, in accordance with a non-limiting implementation of the present specification.
Fig. 5 shows a flowchart of a portion of an example method associated with translation of proper nouns, in accordance with a non-limiting implementation of the present specification.
Fig. 6 shows a flowchart of another portion of the example method associated with translation of proper nouns, in accordance with a non-limiting implementation of the present specification.
Fig. 7 shows a flowchart of yet another portion of the example method associated with translation of proper nouns, in accordance with a non-limiting implementation of the present specification.
Fig. 8 shows a schematic representation of an example machine learning model, in accordance with a non-limiting implementation of the present specification.
Fig. 9 shows a schematic representation of an example neural network, in accordance with a non-limiting implementation of the present specification.
Fig. 10 shows a schematic representation of yet another example mobile device, in accordance with a non-limiting implementation of the present specification.
Fig. 11 shows a schematic representation of an example non-transitory computer-readable storage medium comprising instructions executable by a processor, in accordance with a non-limiting implementation of the present specification.

### DETAILED DESCRIPTION

In the following description, certain specific details are set forth in order to provide a thorough understanding of various disclosed implementations. However, one skilled in the relevant art will recognize that implementations may be practiced without one or more of these specific details, or with other methods, components, materials, and the like.

Unless the context requires otherwise, throughout the specification and claims which follow, the word "comprise" and variations thereof, such as, "comprises" and "comprising" are to be construed in an open, inclusive sense, that is as "including, but not limited to."

As used in this specification and the appended claims, the singular forms "a," "an," and "the" include plural referents unless the content clearly dictates otherwise. It should also be noted that the term "or" is generally employed in its broadest sense, that is as meaning "and/or" unless the content clearly dictates otherwise.

The headings and Abstract of the Disclosure provided herein are for convenience only and do not interpret the scope or meaning of the implementations.

In order to allow for communication between people who speak or understand different languages, those languages may be translated into one another. People who are conversant in multiple languages may be able to act as translators between those languages. In order to automate translations, computer-based translations may be used. These computer-based translations may also be referred to as machine translations.

Machine translations may use trained machine learning models, or other schemes for generating translations. Often machine translations use significant computing resources. In addition, the trained models used for machine translations may become relatively large, requiring correspondingly large computer-readable storage to store the model. Given these relatively large computing resources and storage requirements, machine translation tools often run on a back end that is connected via a network to a user interface. Examples of such a back end may include a cloud-based back end, a server farm, and the like. The user interface may be provided via a mobile device, or another device with input and output terminals.

The network connectivity between the back end and the user interface may be provided by a data network, which may comprise a wired network, a wireless network, or a combination of wired and wireless networks. In some examples, this data network may comprise the Internet, a cellular data network, a satellite communication-based data network, and the like. The machine translation schemes that rely on a network connection between the user interface and a back end may not be able to operate in circumstances where it may not be possible to maintain network connectivity between the user interface and the back end. Examples of such circumstances may include remote locations without ready access to a data network, disaster situations where network infrastructure may have been damaged, secure locations where network connectivity may not be permitted, conflict situations where data networks may be actively undermined by an adversary, and the like.

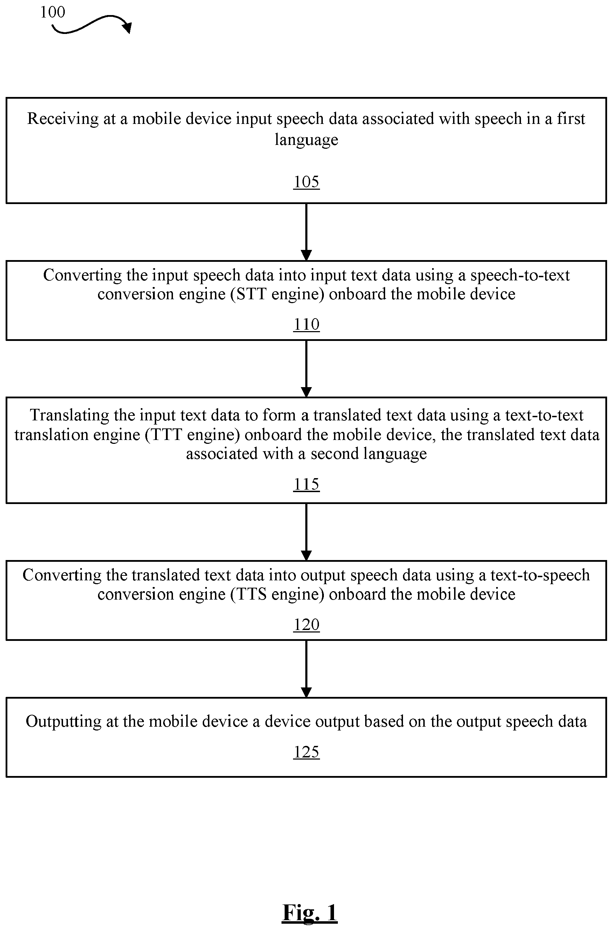

In order to allow for provision of machine translation functionality in circumstances where network connectivity between the user interface and the back end may be absent or unreliable, the machine translation may be performed onboard a mobile device. Such a mobile device may be able to perform machine translations in the absence of data network connectivity to a back end. Fig. 1 shows a flowchart of an example method 100 for speech-to-speech (STS) translation, which may be performed onboard a mobile device in the absence of data network connectivity between that mobile device and a back end.

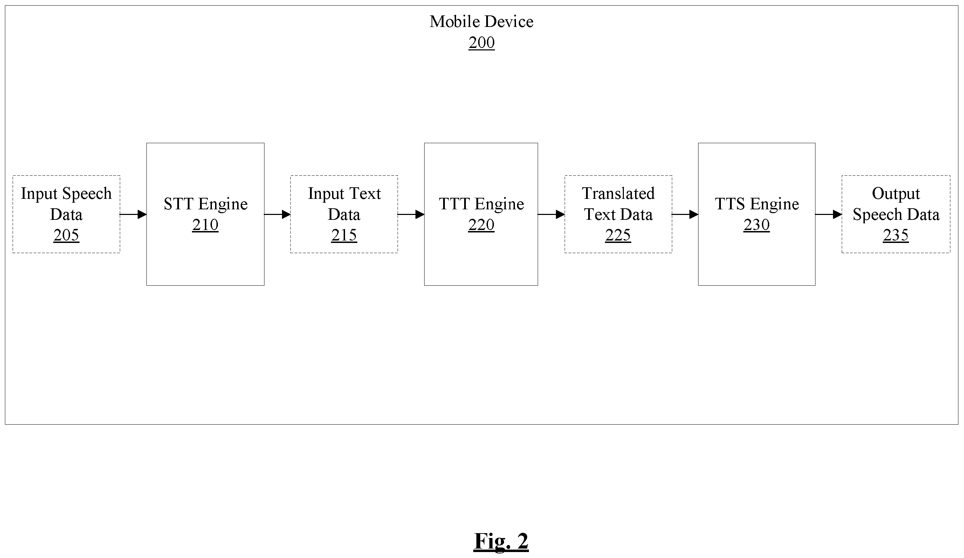

Figs. 2, 3 and 10 show schematic representations of example mobile devices on which the methods described herein may be performed. The devices of Figs. 2, 3, and 10 are described in greater below. Some examples of such mobile devices include smartphones, tablets, wearable devices, and the like. In some examples, such a mobile device may comprise an Edge device. An example of such an Edge mobile device may comprise an Android^{™} mobile device. In some examples, the mobile device may comprise an Edge Android^{™} smartphone, and the like.

Referring back to Fig. 1, at box 105 of method 100 input speech data associated with speech in a first language may be received at a mobile device. The input speech data may comprise digital data storable in a computer-readable storage medium. In some examples, the input speech data may be based on the output of an audio input module, such as a microphone, and the like. In some examples, the audio input module may be part of the mobile device. Moreover, in some examples, the audio input module may be separate from, and in communication with, the mobile device. For example, the audio input module may comprise a headset or earphones that are in wired or wireless communication with the mobile device.

In addition, in some examples, the audio input module may send its raw output to the mobile device, which mobile device may then process that raw output to generate the input speech data. Furthermore, in some examples, the audio input module may process its own raw output to generate the input speech data, and may then communicate that input speech data to the mobile device.

At box 110 of method 100, the input speech data may be converted into input text data using a speech-to-text conversion engine (STT engine) onboard the mobile device. In some examples, the STT engine may comprise one or more trained machine learning models. Moreover, in some examples, such trained machine learning models may comprise an acoustic model. An example of such an acoustic model may comprise a Hybrid Deep Neural Network--Hidden Markov Model (DNN-HMM) with Time Delay Recurrent Neural Network (TDNN) layers and bidirectional Long Short-Term Memory (LSTM) layers.

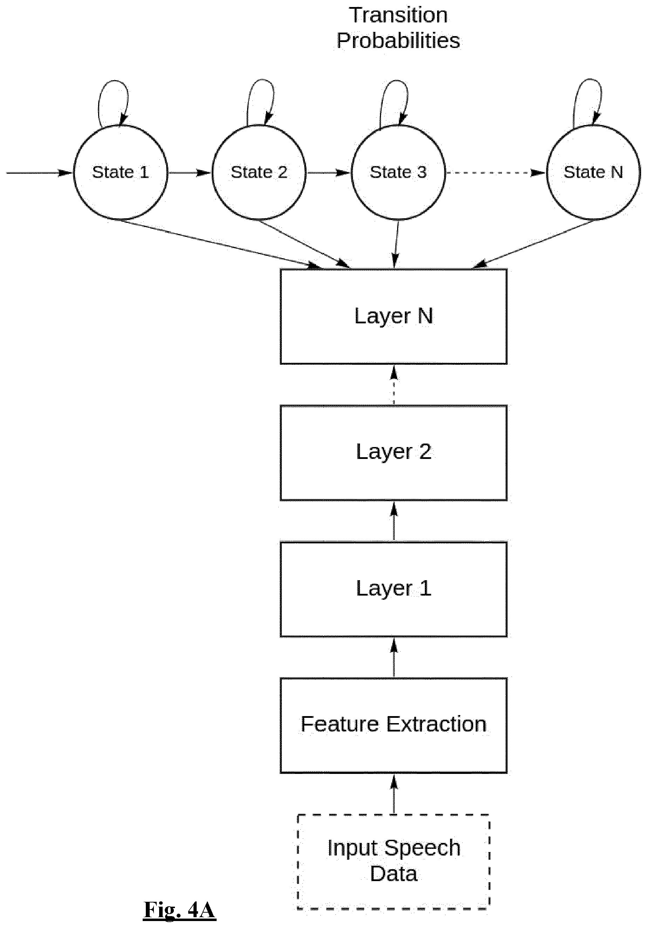

In some examples, such a Hybrid DNN-HMM based acoustic model may comprise a feedforward neural network that contains many hidden layers to estimate the posterior probabilities over HMM states as output. An example is to create a deep brief net (DBN) to generatively model the posterior probabilities of phones' state by feeding the network with acoustic features such as Mel-frequency Cepstral Coefficients (MFCCs) or Perceptual Linear Predictive (PLP) coefficients computed from the raw waveform. The output of the network is then processed by a language model to produce text data. An example of such a language model may comprise Weighted Finite-State Transducers (WFST) or a Long Short-Term Memory (LSTM) network. An example of such a Hybrid DNN-HMM based acoustic model is described further in relation to Fig. 4A. Moreover, an example of such a Hybrid DNN-HMM model is described in Hinton G. et al., "Deep Neural Networks for Acoustic Modeling in Speech Recognition", IEEE Signal Processing Magazine [82] November 2012, which is incorporated herein by reference in its entirety.

Moreover, in some examples, the STT engine may be implemented using the Kaldi^{™} library and utilizing a trigram language model. Moreover, such machine learning models may be trained using different training data to enable the STT engine to perform speech to text conversion for different languages. For example, for the English language the machine learning models of the STT engine may be trained using the following training data sets: Librispeech dataset, Fisher and Switchboard datasets, and the like. In some examples, custom vocabulary may be added into the language models to allow the model to recognize and convert new words.

In some examples, the machine learning models of the STT engine may also be trained for other languages such as Farsi and Levantine Arabic. Machine learning models of the STT engine may also be fine-tuned and trained specifically for different languages or dialects. For example, in the case of Levantine Arabic, it is possible to use a large Modern Standard Arabic (MSA) model with 1000 hour MSA data, then transfer the learning onto Levantine Arabic with 350 hours of Levantine Arabic data. In some examples, the transfer learning model may use an example script provided by Kaldi^{™} An example of such a script is provided in https://github.com/kaldiasr/kaldi/blob/master/egs/rm/s5/local/chain/tuning/run_tdnn_wsj_rm_la.sh, which is incorporated herein by reference in its entirety. In addition, in some examples, subword transcripts may be used instead of word-level transcripts, using Byte Pair Encoding (BPE).

As set out in box 110 of Fig. 1, the STT engine may convert the input speech data into its corresponding input text data. This input text data may also comprise electronic data storable in a computer-readable storage medium. The input text data may reflect the text corresponding to the input speech data. In addition, the STT engine may be stored in and operate onboard the mobile device. This, in turn, may allow the STT engine to perform its function without the need for data network connectivity between the mobile device and back end computing or storage resources.

Turning now to box 115, the input text data may be translated to form translated text data using a text-to-speech translation engine (TTT engine) onboard the mobile device. The translated text data may be associated with the second language. In other words, that TTT engine may translate the input text data associated with the first language to form the translated text data associated with the second language. In some examples, that TTT engine may comprise one or more trained machine learning models. These machine learning models may then be used for machine translation.

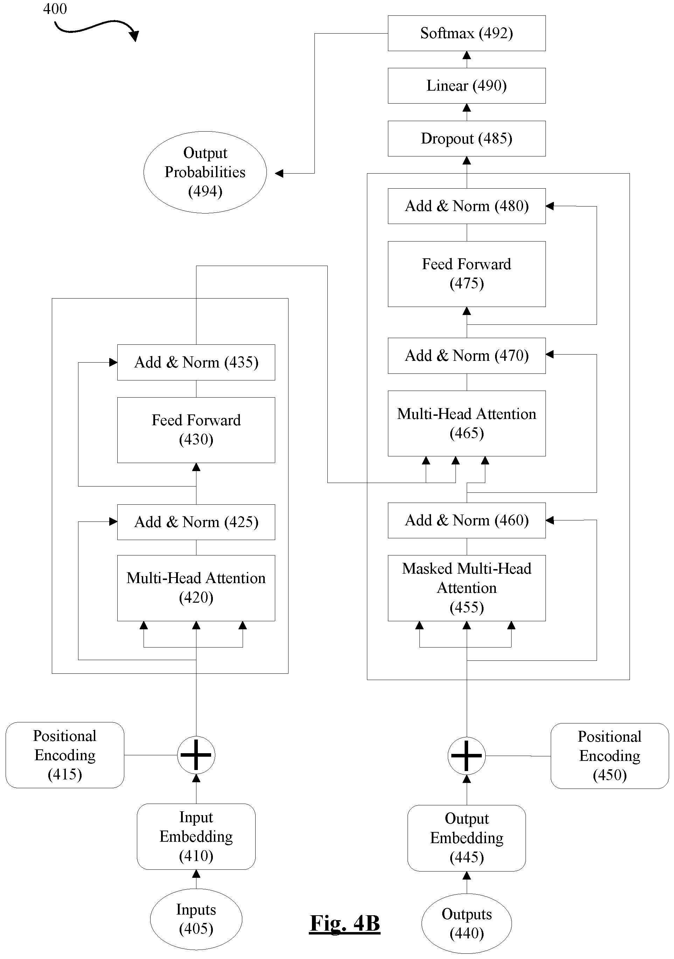

The machine learning models of the TTT engine may be trained and optimized for different languages. In some examples, the machine learning models of the TTT engine may comprise Transformers Encoder-Decoder models (TED models). Such TED models are described in greater detail in relation to Fig. 4B. The TTT engine may be stored in and operate onboard the mobile device, which in turn may allow the TTT engine to perform its function without the need for data network connectivity between the mobile device and back end computing or storage resources.

In some examples, the input text data generated by the STT engine may not include punctuations. In order to enhance the performance of the TTT engine, a punctuator engine may be used to add punctuations to at least a portion of the input text data generated by the STT engine. Some examples of punctuation may include a period, question mark, exclamation mark, comma, colon, semi-colon, and the like. Some such punctuations may be sentence end punctuations, signifying the end of a sentence. Examples of sentence end punctuations may include a period, question mark, and exclamation mark. Moreover, in some examples, the punctuator engine may add sentence end punctuations, and need not add other types of punctuations.

In addition, in some examples, the punctuator engine may comprise or be implemented as a trained machine learning model. In some such examples, the punctuator engine may comprise or be implemented as a bidirectional recurrent neural network. Gated recurrent units (GRU), that are well suited for capturing long range dependencies on multiple time scales, may be used. An attention mechanism may be introduced to further increase the capacity of finding relevant parts of the context for punctuation decisions. To fuse together the model state at the current input word and the output from the attention mechanism, a late fusion approach adapted from Long Short-Term Memory (LSTM) to GRU may be adopted. This allows the attention model output to directly interact with the recurrent layer state while not interfering with its memory. An example of such a bidirectional recurrent neural network is described in greater detail in Tilk, Ottokar and Tanel Alumae, "Bidirectional Recurrent Neural Network with Attention Mechanism for Punctuation Restoration" INTERSPEECH (2016), which is incorporated herein by reference in its entirety.

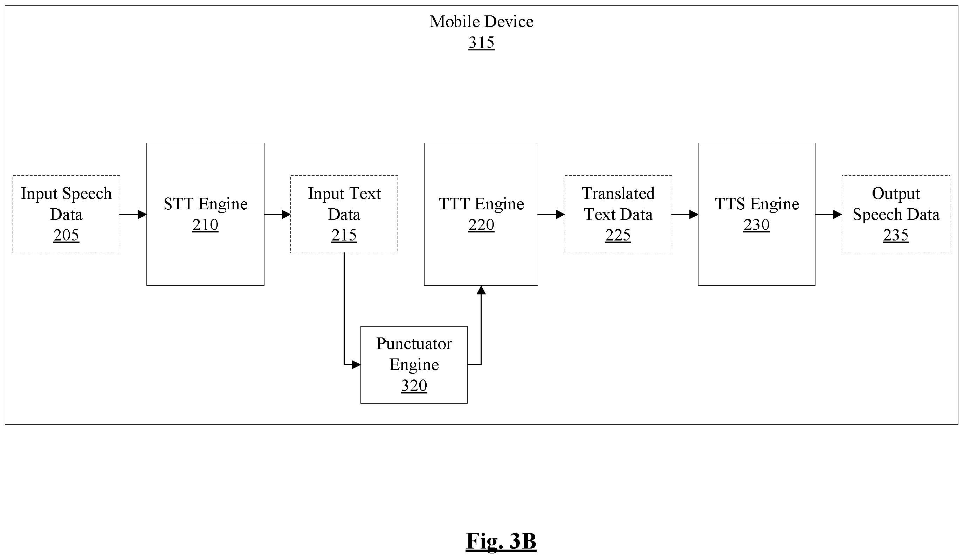

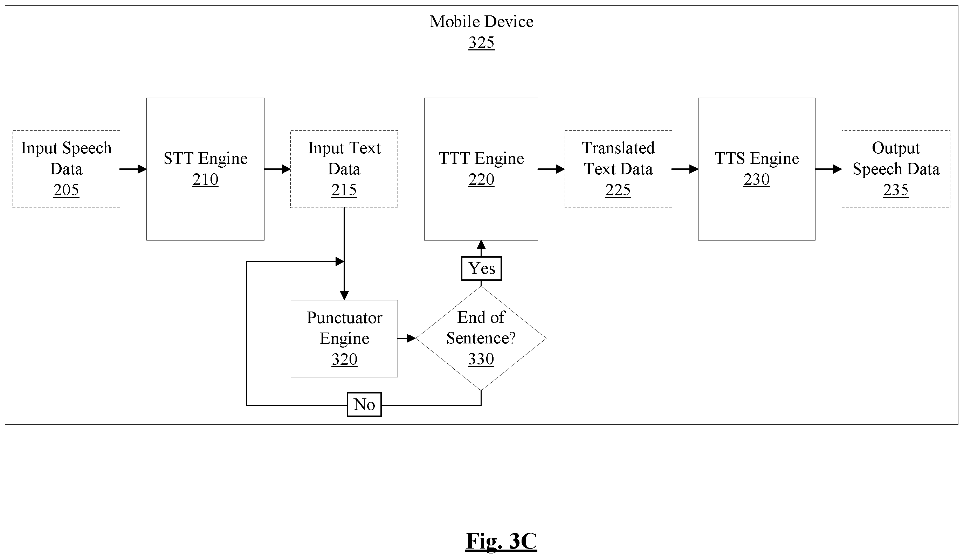

Moreover, in some examples, once the punctuator engine finds the end of a given sentence and adds a sentence end punctuation, that given sentence may be sent to the TTT engine. In other words, once the punctuator engine adds punctuations on a portion of the input text data, that portion may be checked for a sentence end punctuation. If a sentence end punctuation is found in the punctuated portion of the input text data, then the sentence corresponding to that sentence end punctuation may be translated by the TTT engine. The functions of the punctuator engine are described further in relation to Figs. 3B and 3C.

Furthermore, it is contemplated that in some examples, the STT engine may add at least some punctuation, including sentence end punctuation, when generating the input text data. In some such examples, the STT engine may perform the function of the punctuator engine, and a separate punctuator engine may not be used.

At box 120, the translated text may be converted into output speech data using a text-to-speech conversion engine (TTS engine) onboard the mobile device. The output speech data may comprise electronic data storable on a computer-readable storage medium. In some examples, the output speech data may be used by an audio output module to generate an audio output comprising a corresponding speech in the second language associated with the output speech data. In some examples, such an audio output module may comprise a speaker, and the like. It is also contemplated that in some examples, the audio output module may comprise additional hardware or software components to allow for generating the speech in the second language based on the output speech data. Examples of such additional hardware or software components may comprise a signal processing module, a speech synthesizing component, a speaker driver component, and the like.

Moreover, in some examples, the audio output module may be a part of the mobile device. It is also contemplated that in some examples, the audio output module may be a component separate from, and in communication with, the mobile device. For example, the audio output module may comprise a headset, headphones, or earphones in wired or wireless communication with the mobile device.

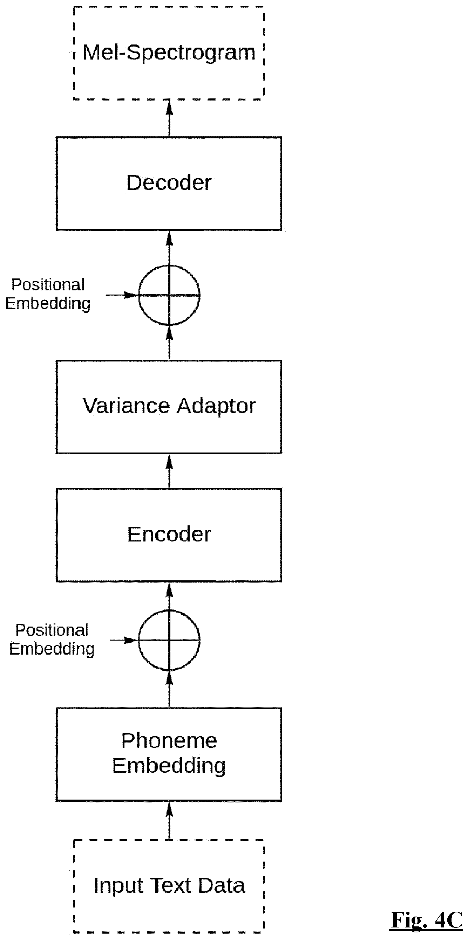

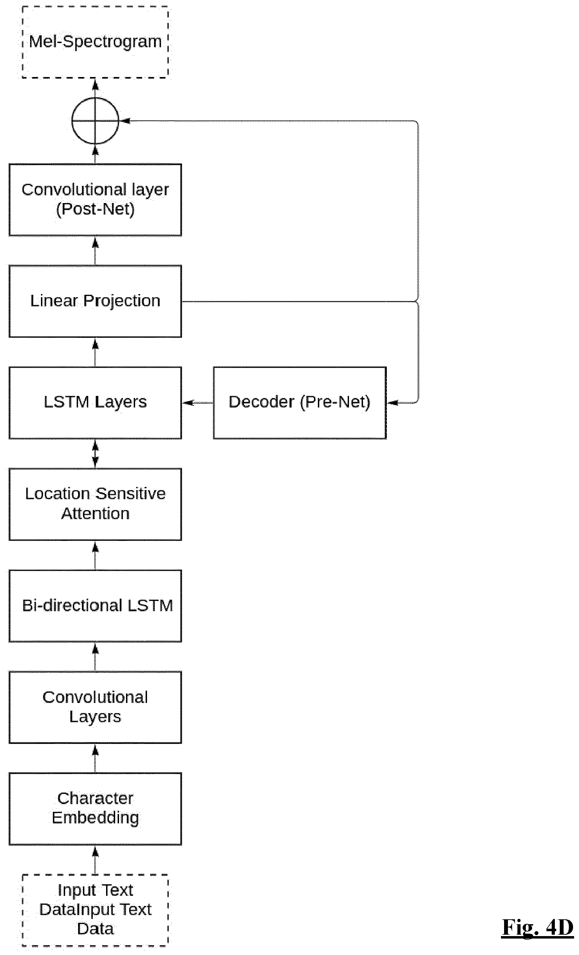

In some examples, the TTS engine may comprise one or more trained machine learning models. For example, the TTS engine may comprise Tacotron2^{™} and Fastspeech2^{™}. Fastspeech2^{™} is a fast and high-quality end-to-end non-autoregressive text-to-speech system, which uses convolutional networks to convert raw text into mel-spectrograms. It also predicts character-time alignment, pitch, and energy to improve the generated mel-spectrograms. Tacotron2^{™} is another end-to-end text-to-speech system that combines a sequence-to-sequence recurrent network with attention to predict a mel-spectrogram directly from text. Tacotron2^{™} can also generate character-time alignment that is required to train a Fastspeech2^{™} model. Examples of such Fastspeech2^{™} and Tacotron2^{™} models are described further in relation to Figs. 4C and 4D respectively.

Moreover, in some examples, the TTS engine may be implemented using the tools provided by the TensorflowTTS^{™} library. Machine learning models of the TTS engine may be trained and fine-tuned for different languages. For example, these machine learning models may be trained for the Farsi language. An example of such training may comprise training machine learning models using 15 hours of Farsi data. Punctuations may also be added to the training data to enable the production of different sound tones. Moreover, in the case of Levantine Arabic, the machine learning models may similarly be trained using 15 hours of data.

As with the STT and TTT engines, the TTS engine may be stored in and operate onboard the mobile device, which in turn may allow the TTS engine to perform its function without the need for data network connectivity between the mobile device and back end computing or storage resources.

At box 125 of method 100, a device output may be output at the mobile device based on the output speech data. In some examples, the device output may comprise data such as the output speech data. Outputting such data may comprise storing the data in a computer readable storage medium onboard the mobile device or outside of the mobile device. In addition, outputting such data may also comprise sending the data to a different component within the mobile device, or to a component or device outside of the mobile device.

Furthermore, in some examples, the device output may comprise an audio output, a video output, a haptic output, and the like. In some such examples, the device output may comprise an audio output comprising corresponding speech in the second language associated with the output speech data. As discussed above, in some examples this audio output may be generated using an audio output module that is part of the mobile device. An example of such an audio output module may comprise a speaker, and the like.

In other words, the output speech data generated onboard the mobile device may allow for an audio output to be generated, which output may correspond to speech in the second language associated with the output speech data. The speech in the second language may be generated either by the mobile device itself or by another device outside of the mobile device. Moreover, in some examples, method 100 may further comprise receiving at the mobile device an audio input corresponding to the speech in the first language and converting the audio input into the input speech data. For example, the mobile device may receive the audio input at a microphone onboard the mobile device. The mobile device may then convert that audio input into the input speech data that can be used by the STT engine to form the input text data.

As described above, method 100 may allow for translating speech in first language into speech in the second language. Moreover, as the STT engine, the TTT engine, and the TTS engine are all stored and operating onboard the mobile device, the mobile device is able to perform this speech-to-speech translation without the need for data network connectivity to a back end or outside resource.

As described above, in some examples the TTT engine may comprise one or more trained machine learning models. In some examples, these machine learning models may become too large to be storable onboard the mobile device. In some such examples, the trained machine learning models may be compressed to form one or more corresponding compressed trained machine learning models storable onboard the mobile device.

For example, in some examples the TTT engine may comprise a Transformers Encoder-Decoder machine learning model. This Transformers Encoder-Decoder machine learning model may also be described as a Transformers Encoder-Decoder machine translation model. In some examples, this Transformers Encoder-Decoder machine translation model may be compressed to form a compressed Transformers Encoder-Decoder machine translation model storable onboard the mobile device.

Moreover, in some examples, the compression may be implemented using TFlite^{™}. In some examples, the tools provided by Android Studio^{™} and Tensorflow^{™} may also be used to assist with the compression. For example, a model compression pipeline may be created, which compresses the model and checks the change in the value of the evaluation metric after compression. Then, this compressed model may be deployed on Android^{™} and hardware delegates may be explored. This, in turn, may involve multi-threading, a Graphical Processing Unit (GPU) delegate, and a neural network API delegate, to improve latency.

In addition, in some examples, preprocessing or postprocessing tools may be used to condition or adapt the machine learning models of the TTT engine, or those of the other engines, for deployment on an Android^{™} mobile device. Examples of such tools may include converting programming languages associated with the machine learning models from Python to Java to allow for the machine learning models to be deployed on an Android^{™} mobile device.

Furthermore, in some examples, the effectiveness of the compression or the pre- and postprocessing may be tested by comparing the translations generated by the machine learning models of the TTT engine operating onboard the mobile device against the corresponding translations generated by the same machine learning models running on a cloud-based or other back end.

In some examples, to prepare the machine learning models of the STT engine, the TTT engine, and the TTS engine for operation aboard a mobile device, one or more of these machine learning models may be trained on a cloud-based back end to provide the trained machine learning models which are then transferred onboard the mobile device. In some examples, one or more of the following tools may be used for such preparation of these machine learning models: Seldon Core^{™} Framework, Docker^{™}, Kubernetes^{™}, Cloudbuild^{™}, and the like.

In some examples, the machine learning models may be wrapped in Seldon Core^{™} and containerized using Docker^{™}. Kubernetes^{™} deployment files may then be used to connect the machine learning models of the STT, TTT, and TTS engines together in a linear pipeline. Inference calls from the front-end may be leveraged securely using route mapping with Ambassador API Gateway^{™} and a custom authentication service. Google^{™} Cloud Platform (GCP) buckets may be mounted to the containers for fetching and delivering audio files for each inference call from the front-end using a custom pre-signed URL service. Continuous Integration (CI) may be implemented as a consistent and automated way to build, test, and deploy the application in a continuous form using GCP Cloudbuild^{™}.

Referring back to method 100, in some examples the method may further comprise receiving user input at the mobile device, which user input may then be used to update or retrain one or more of the machine learning models that are used in the STT, TTT, and TTS engines. For example, the user input may be received at the mobile device in relation to one or more of the translated text data and the output speech data. One or more of the STT engine, the TTT engine, and the TTS engine may then be retrained based on that user input. This, in turn, may provide an active learning capability for the speech-to-speech translation functionality provided by the mobile device.

In some examples, the user input may be stored onboard the mobile device until the next time when the mobile device has data network connectivity. When the mobile device is connected to a data network, the user input may be sent to a cloud-based or other back end. Computing resources provided at the back end may then be used to retrain one or more of the machine learning models, and those retrained models may then be communicated back to the mobile device.

The back end computing resources used for retraining these machine learning models may also be referred to as a retraining module. Such a retraining module may comprise computing resources within a cloud-based or other back end. Moreover, in some examples, such a retraining module may comprise dedicated hardware or software for retraining, or dedicated processing time on shared hardware or software. In addition, examples of such user input may include a user's evaluation of one or more of the speech-to-text conversions, text-to-text translations, and text-to-speech conversions.

Furthermore, in some examples, the data received at or generated by the mobile device may be used to provide analytics capabilities. Examples of such data may include the input speech data, the input text data, the translated text data, and any user input in relation to the other data received at or generated by the translation functionality of the mobile device. Other examples of such data may also include audio files of the speech in the first language received at the mobile device, and the like.

Types of analytics performed may include sending data to an annotation platform for annotators to manually check for errors and to correct and flag any such errors. Other types of analytics may also be performed, such as determining the most commonly used words, and determining the sentiment of conversations by region, by dialect, and the like. The types of analytics may also include determining the different dialects, and words used in different geographical regions. Furthermore, the types of analytics may include identifying common references between different users and regions, and tracking them for consistency. In other words, determinations may be made as to how different individual users, or users from different regions, react to or give meaning to different words, phrases, or sentences.

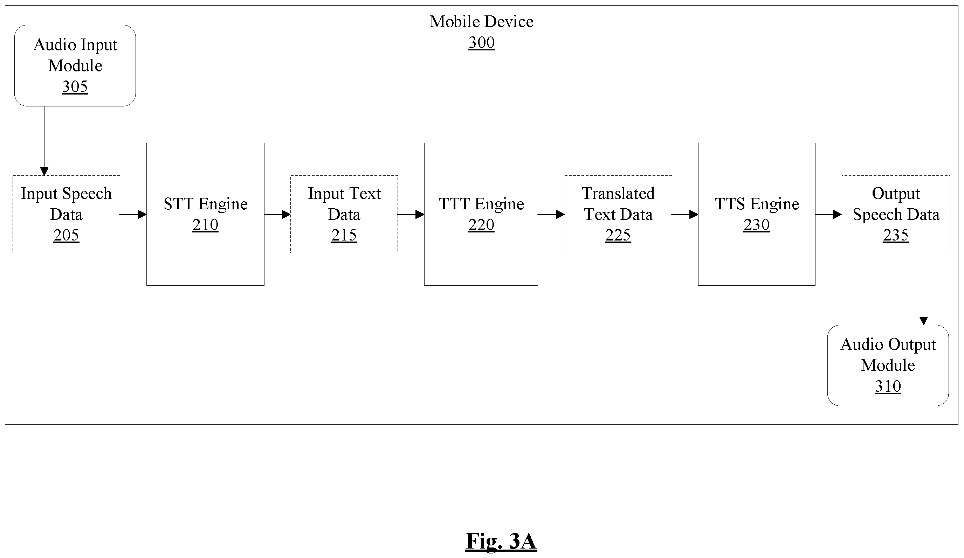

Turning now to Figs. 2 and 3A-C, schematic representations are shown of example mobile devices 200, 300, 315, and 325 respectively, which mobile devices may be used to perform some or all of method 100 and the other methods described herein. Fig. 2 shows input speech data 205 received at mobile device 200. Input speech data 205 is associated with speech in a first language. Mobile device 200 also comprises a STT engine 210, which receives input speech data 205 and converts it to input text data 215.

In addition, mobile device 200 comprises a TTT engine 220, which receives input text data 215 and translates it to form translated text data 225. Translated text data 225 is associated with a second language. Moreover, mobile device 200 also comprises a TTS engine 230, which receives translated text data 225 and converts it into output speech data 235. Mobile device 200 may then output a device output based on output speech data 235. In some examples, this device output may comprise an audio output comprising speech in the second language associated with output speech data 235. In this manner, mobile device 200 may perform speech-to-speech translation using STT engine 210, TTT engine 220, and TTS engine 230 all of which engines are stored and operating onboard mobile device 200. As discussed above, STT engine 210, TTT engine 220, and TTS engine 230 may not need mobile device 200 to have data network connectivity in order to complete their functions to allow device 200 to perform speech-to-speech translation.

Input speech data 205, input text data 215, translated text data 225, and output speech data 235 may comprise digital data or digital data structures, similar to those described herein in relation to method 100 and the other methods described herein. In addition, STT engine 210, TTT engine 220, and TTS engine 230 may comprise trained machine learning models similar to those described herein in relation to method 100 and the other methods described herein. In some examples, one or more of STT engine 2210, TTT engine 220, and TTS engine 230 may be implemented as software modules, hardware modules, or a combination of software and hardware modules onboard mobile device 200.

In Fig. 2, input speech data 205, input text data 215, translated text data 225, and output speech data 235 are shown in dashed lines, while STT engine 210, TTT engine 220, and TTS engine 230 are shown in solid lines. This difference in line style is intended to distinguish between the engines and the data either used as input or generated as the output by those engines.

Turning now to Fig. 3A, a schematic representation is shown of an example mobile device 300. Mobile device 300 may be similar to mobile device 200, with a difference being that mobile device 300 also comprises an audio input module 305 and an audio output module 310. Audio input module 305 may receive an audio input corresponding to speech in the first language, and may convert it into input speech data 205. Moreover, audio output module 310 may generate an audio output comprising a corresponding speech in the second language associated with output speech data 235.

The audio input and audio output modules 305 and 310 may be similar to the corresponding modules described herein in relation to method 100 and the other methods described herein. For example, audio input module 305 may comprise a microphone, and the like. Moreover, in some examples, audio output module 310 may comprise a speaker, and the like.

As described above in relation to method 100 and the other methods described herein, in some examples, the input text data generated by the STT engine may not include punctuations. In order to enhance the performance of the TTT engine, a punctuator engine may be used to add punctuations to at least a portion of the input text data generated by the STT engine. Fig. 3B shows a schematic representation of an example mobile device 315 having such a punctuator engine 320. Device 315 may be similar to device 200, with a difference being that in device 315 punctuator engine 320 is used to add at least some punctuations to at least a portion of input text data 215, before input text data 215 is translated by TTT engine 220. The function, structure, and implementation of punctuator engine 320 may be similar to those described in relation to method 100 and the other methods described herein.

Turning now to Fig. 3C, a schematic representation is shown of an example mobile device 325. Device 325 may be similar to device 315, with a difference being that in device 325 once punctuator engine 320 identifies the end of a given sentence by adding a sentence end punctuation, that sentence may then be translated by TTT engine 220. In other words, in device 325 punctuator engine 320 adds punctuations to at least a portion of input text data 215. Then at box 330 a determination is made as to whether a sentence end has been identified or reached in the punctuated portion of input text data 215. In some examples, that determination may take the form of that punctuated portion being checked for a sentence end punctuation. This checking may be performed by punctuator engine 320, TTT engine 220, or by another component of device 325.

If a sentence end punctuation is found, i.e. if the determination at box 330 is affirmative, then TTT engine 220 may receive and translate the sentence corresponding to the sentence end punctuation. If the determination at box 330 is negative, the process may wait until either STT engine 210 generates more input text data 215 for punctuator engine 320 to punctuate, or until punctuator engine 320 adds more punctuations to the input text data available to it, before checking the punctuated portion of the input text data 215 again for a sentence end punctuation.

It is also contemplated that in some examples, upon a negative determination at box 330, the process may have a different trigger for rechecking the punctuated portion of input text data 215 for sentence end punctuations. Examples of these triggers may include a predetermined time delay or schedule, a trigger based on a user providing more input speech data, and the like.

Fig. 4A shows a schematic representation of an example a Hybrid Deep Neural Network-Hidden Markov Model (DNN-HMM) based acoustic model. Such a model may comprise several fully-connected layers to predict the posterior probabilities of the hidden states. The input speech is processed by a feature extractor to produce speech features such as Mel-frequency Cepstral Coefficients (MFCCs), Perceptual Linear Predictive (PLP) coefficients or log mel-filter bank spectrum energies. The features are concatenated and normalized into a fixed-length vector. The vector is consumed by several fully-connected layers with ReLU activation to produce the transition probabilities of each hidden state.

Turning now to Fig. 4B, a schematic representation is shown of an example Transformers Encoder-Decoder machine learning model (TED model) 400. The Transformers Encoder-Decoder machine learning model may also be referred to as a Transformers Encoder-Decoder machine translation model. As described above, in some examples the TED model may be used as part of the TTT engine used for text-to-text translation.

As shown in Fig. 4B, TED model 400 may comprise several components. First the input which is a text written in the source language (405) is tokenized and mapped to randomly initialized vector embeddings (Module 410). In this architecture, unlike Recurrent Neural Networks (RNN) models, the words' order in the sentence is not kept. Therefore, module 415 adds positional encoding to the embeddings, which accounts for the words' order. TED model 400 also comprises the encoder block which is composed of four internal modules. One of these modules is the Multi-Head Attention (420) which calculates how related each word is to the other words in the same sentence. The input and output of this module are vector embeddings of shape (n of tokens, vectors dimension). The Feed Forward module (430) is then used to map the attention vectors to interpretable vectors for the decoder.

After both modules 420 and 430, TED model 400 comprises normalization components (425 and 435) which are used to normalize the vectors in a column-wise manner. This normalization operation is designed to make the training faster or more efficient. The right side of Fig. 4B depicts the decoder of TED model 400. The decoder comprises several components. The input (440) to the decoder is the translation of the source sentence (405) in the target language shifted one token to the right. The modules 445 and 450 act similarly to the modules 410 and 415, respectively. TED model 400 also comprises the Masked Multi-Head Attention (455) which, similar to the module 420, finds relationships between the words in the target text. Unlike the Multi-Head Attention (420) in the encoder side, in the case of Masked Multi-Head Attention (455) the attentions for each given word are computed only for the words appearing before that given word in the sentence, and the words appearing on the right side of that given word in the sentence are masked. This simulates the real word application of language translation, where the translator does not have access to the ground truth translation when translating a given sentence. The next component is Multi-Head attention (465) which finds the relationships between the words in the source language (405) and the words in the target language (440). The Normalization (460,470,480) and Feed Forward (475) components act similarly to their equivalents in the encoder side. Dropout (485) is then used to prevent TED model 400 from overfitting on the training dataset. TED model 400 also comprises a linear layer (490) followed by a Softmax layer (492) which maps the attention vectors to probabilities over the vocabulary in the target language.

TED model 400 may be modified, fine-tuned, and trained differently for different languages. For example, in relation to Farsi, tools from the following libraries may be used: Tensorflow^{™}, Huggingface^{™}, NLTK^{™}, and the like. Furthermore, in some examples, hyper-parameter tuning may be performed on learning-rate, number of layers, number of attention heads, dropout, tokenizer vocabulary size, and the model's dimension. For example, grid-search may be performed on a small subset for each of the parameters. In some examples, TED model 400 for Farsi may comprise one or more of: a number of layers of 4, a dimension of attention model of 128, a dimension of feed forward layer of 1024, a number of attention heads of 16, and a dropout rate of 0.15. It is contemplated that in some examples other values for the parameters may also be used.

Some additional hyper-parameter and training parameters may include: tokenizer vocabulary size (English 16000, Farsi 16000), batch size per GPU of 512, maximum length of 64, 15 training epochs, and data: half-spaces u200b, and no contractions replacements.

Moreover, the TED model for Farsi may be trained using a training dataset comprising one or more of movie subtitles, paraphrased sentences, keyword sentences, open subtitles, tep, and the like. In some examples, these training datasets may be preprocessed before being used for training TED model 400. Examples of such preprocessing may include normalizing characters, filtering out other languages, normalizing punctuations, and the like.

Furthermore, in some examples, in relation to Levantine Arabic, tools from the following libraries may be used: Tensorflow^{™}, Huggingface^{™}, NLTK^{™}, Transformers^{™}, and the like. Furthermore, in some examples, hyper-parameter tuning may be performed on learning-rate, number of layers, number of attention heads, dropout, tokenizer vocabulary size, and the model's dimension. In some examples, TED model 400 for Levantine Arabic may comprise one or more of: a number of layers of 4, a dimension of attention model of 128, a dimension of feed forward layer of 2048, a number of attention heads of 8, and a dropout rate of 0.15. It is contemplated that in some examples other values for the parameters may also be used.

In addition, in relation to Levantine Arabic, an Adam optimizer may be used for scheduling the learning rate. Moreover, fine tuning may be performed on a subset of Levantine Arabic training datasets. Given the scarcity of the available Levantine corpora, initially the model may be trained on a Modern Standard Arabic (MSA) dataset and the resulting model may then be finetuned on a subset of pure Levantine-English parallel text. Moreover, in order to avoid overshooting and overfitting the model on the subset of the Levantine Arabic parallel text, finetuning may be realized with a relatively smaller learning rate.

Furthermore, in some examples, in relation to Levantine Arabic, a BPE based tokenizer may be trained on only Levantine text in order to capture the language characteristics of the Levantine dialect. Moreover, in some examples, the training may be divided into two phases: an initial training phase and a finetuning phase. During the initial phase, an example set of parameters may include: vocabulary size of 50000 for each of English and Levantine Arabic, batch size of 512, maximum sentence length in the buffer of 54, number of layers of 4, number of MSA sentences of 11 million, number of epochs of 10, dimension of the attention model of 128, dimension of the feed forward layer of 2048, number of attention heads of 8, and dropout rate of 0.15. The parameters of the Adam optimizer may include *β*₁ = 0.9, *β*₂ = 0.98, *∈* = 10⁻⁹. The learning rate for the initial training (using MSA and Levantine data) may include a learning rate according to the following equation: *lrate*= *d^{-0.5}_{model}.min*(*stepnum*^{-0.5}*,stepnum.warmupsteps*^{-1.5})*.*

For the finetuning phase, some modifications to the training regime and parameters may be implemented. For example, the learning rate may be modified as follows: *lrate*= (*d_{model}* ∗ 0.3)^{-0.5} . *min*(*stepnum*^{*-*0.5}*, stepnum. warmupsteps*^{*-*1.5})*.* The number of epochs for the finetuning phase may be 5. Moreover, the number of MSA sentences may be one million, and the number of Levantine Arabic sentences may be 350,000.

Fig. 4C shows a schematic representation of an example Fastspeech2^{™} model. Fastspeech2^{™} is able to predict the mel-spectrogram with variance information such as pitch and volume given the phoneme embedding. The phoneme embedding is processed by an encoder which stacks several self-attention and 1D convolutional blocks. The output of the encoder is then fed into a variance adaptor to add variance information such as duration and speech energy. The variance adaptor comprises several predictors for speech information such as duration, pitch, and energy. An example of such a predictor comprises a stack of 1D convolution and fully-connected layers. The hidden sequence produced by the variance adaptor is combined with positional embedding and consumed by a decoder that converts the hidden sequence into a mel-spectrogram of speech. An example of such a decoder comprises transposed 1D convolution, dilated 1D convolution, and regular 1D convolution.

Fig. 4D shows a schematic representation of an example a Tacotron2^{™} model. In some examples, Tacotron2^{™} comprises a recurrent sequence-to-sequence feature prediction network that accepts the character embedding of a given text as input and produces its corresponding mel-spectrogram. The network is comprised of an encoder and a decoder with attention. The encoder comprises several convolutional layers and LSTM layers to generate a hidden feature representation of the input text. The encoded feature is consumed by an attention network to produce a fixed-length context vector. The context vector is processed by a decoder comprising a pre-net with two fully-connected layers, a post-net with five convolutional layers, and several LSTM layers. The decoder produces a mel-spectrogram frame by frame. Tacotron2^{™} may also employ a modified WaveNet as a vocoder to convert mel-spectrogram into waveform.

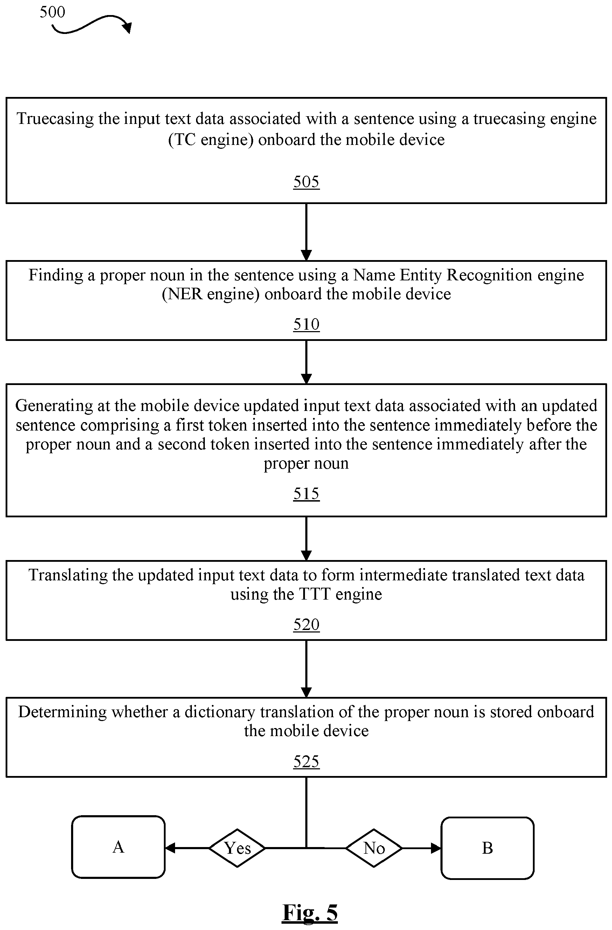

In some examples, the ability of the TTT engine to correctly translate proper nouns may be enhanced by augmenting the translation provided by the trained machine learning model with additional equivalents (in the second language) of the proper noun from one or more of a dictionary and a transliteration engine (TLT engine). Moreover, in some examples, such augmenting may comprise comparing the translation provided by the trained machine learning model with the dictionary translation and the transliteration, and selecting the best of those alternatives as the chosen translation of the given proper noun. Figs. 5, 6, and 7 show flowcharts of an example method 500 that may be used for enhancing the translation of proper nouns by the TTT engine. In some examples, method 500 and its associated methods may be performed as part of, or in conjunction with, method 100 and its associated methods.

Referring to Fig. 5, at box 505 the input text data associated with a sentence may be truecased using a truecasing engine (TC engine) onboard the mobile device. In some examples, truecasing may comprise ensuring that a sentence is capitalized correctly. For example, the first letter of the first word of the sentence may be capitalized as part of the truecasing process. Moreover, in some examples, words or sentences that are in all caps may be at least partially converted to lowercase letters. It is contemplated that other types or examples of truecasing may also be used.

Furthermore, in some examples, the TC engine may comprise a trigram statistical language model, for example as described in Lita L. V., et al, "tRuEcasIng" Proceedings of the 41st Annual Meeting of the Association for Computational Linguistics (ACL 2003), July 7-12, Sapporo, Japan, which is incorporated herein by reference in its entirety.

At box 510 a proper noun in the truecased sentence may be found using a Name Entity Recognition engine (NER engine) onboard the mobile device. Moreover, in some examples, the NER engine may comprise a bidirectional LSTM recurrent neural network, for example as described in Qi, P. et al, "Stanza: A Python Natural Language Processing Toolkit for Many Human Languages" Proceedings of the 58th Annual Meeting of the Association for Computational Linguistics: System Demonstrations, July 2020, pages 101-108, which is incorporated herein by reference in its entirety.

While Fig. 5 shows the operation of the NER engine following the truecasing by the TC engine, it is contemplated that in some examples the truecasing and the name entity recognition steps may be performed in parallel. In such examples, the NER engine may operate on a sentence that has not yet been truecased, or one that is not truecased by the TC engine. Moreover, it is also contemplated that in some examples, method 500 need not comprise a truecasing operation. In such examples, the NER engine may operate on a sentence that has not yet been truecased, or one that is not truecased by the TC engine.

At box 515, an updated input text data may be generated at the mobile device. This updated input text data may be associated with an updated sentence comprising a first token inserted into the sentence immediately before the proper noun and a second token inserted into the sentence immediately after the proper noun. In some examples, the insertion of these tokens may be performed by a component of the TTT engine.

In some examples, these tokens may comprise a string comprising letters. It is also contemplated that in some examples the tokens may comprise numbers or symbols in addition, or instead of, letters. Furthermore, in some examples, the tokens may be chosen to be distinct from common words or dictionary words. The machine translation model of the TTT engine may be trained to reproduce or preserve the tokens inserted into the input sentence in the output or translated sentences generated by the TTT engine. Examples of such tokens may include <PNPC>, </PNPC>, <PNLC>, </PNLC>, and the like.

In addition, it is contemplated that in some examples, a different number of tokens may be inserted into a sentence, or that the relative position of the token(s) with respect of a proper noun may be different than those described above. Furthermore, in some examples, the token inserted before the proper noun may be different than the token inserted after the proper noun. For example, <PNPC> may be inserted before proper noun, and </PNPC> may be inserted after proper noun.

Moreover, in some examples, the tokens used in association with proper nouns associated with persons' names may be different than the tokens used in association with proper nouns associated with the names of places. For example, <PNPC> and </PNPC> respectively may be used before and after a proper noun associated with a person's name, and <PNLC> and </PNLC> respectively may be used before and after a proper noun associated with the name of a place. This distinguishing of person and place proper nouns may enhance the ability of method 500 to find the optimal translated equivalent for the proper noun.

At box 520 the updated input text may be translated using the TTT engine to form intermediate translated text data. In some examples, this intermediate translated text data may reproduce the tokens inserted into the updated input text data either unchanged, or in a manner such that the tokens are recognizable in the intermediate translated text data.

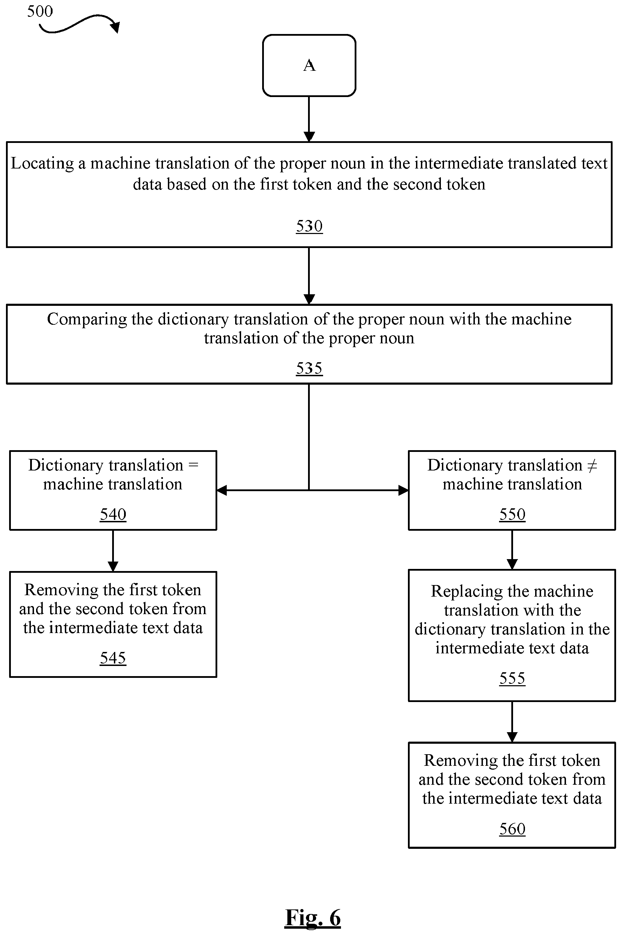

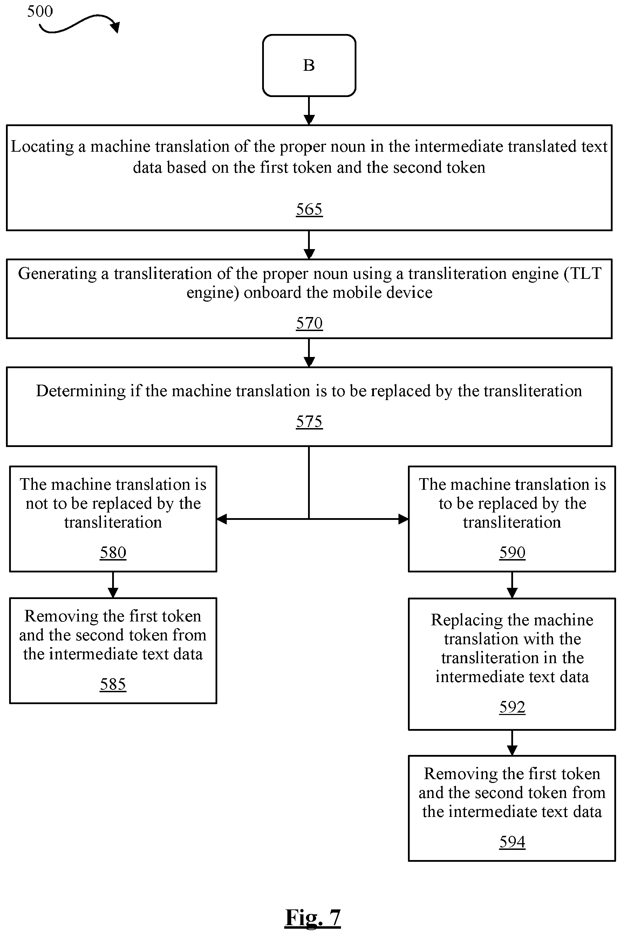

At box 525 the determination may be made as to whether the dictionary translation of the proper noun is stored onboard the mobile device. In some examples, this determination may be made by the TTT engine. It is determined that a dictionary translation is available onboard the mobile device, then method 500 proceeds to the operations shown in Fig. 6. If, on the other hand, it is determined that a dictionary translation is not available onboard the mobile device, then method 500 proceeds to the operations shown in Fig. 7.

Turning now to Fig. 6, at box 530 a machine translation of the proper noun is located in the intermediate translated text data based on the first token and the second token. In some examples, the machine translation of the proper noun is located in the intermediate translated text data as being the word(s) between the first and second tokens reproduced in the intermediate translated text data. In other words, in the updated input text data the first and second tokens may be used to bookend or "wrap" the proper noun. The machine translation of the proper noun in the intermediate translated text data is then located as being the word(s) bookended or wrapped by the tokens in the intermediate translated text data.

At box 535 the dictionary translation of the proper noun may be compared with the machine translation of the proper noun. If the dictionary translation is the same as the machine translation, as shown in box 540, then method 500 may move to box 545. At box 545 the first token and the second token may be removed from the intermediate text data to generate the translated text data.

If, on the other hand, the dictionary translation of the proper noun is not the same as the machine translation, as shown in box 550, then method 500 may move to box 555. The translated text data may then be generated by replacing the machine translation with the dictionary translation in the intermediate text data (box 555) and removing the first and second tokens from the intermediate text data (box 560).

In this manner, as shown in Fig. 6, when a dictionary translation is available onboard the mobile device, that dictionary translation may be used as the translation of the proper noun in the translated text data.

Turning now to Fig. 7, at box 565 a machine translation of the proper noun is located in the intermediate translated text data based on the first token and the second token. This operation may be similar to the corresponding operation described in relation to box 530. At box 570 a transliteration of the proper noun may be generated using a transliteration engine (TLT engine) onboard the mobile device. In some examples, the TLT engine may receive as input the proper noun in a first language, and may generate as its output a transliteration of that proper noun in a second language.

In some examples the TLT engine may comprise a TED model similar to the TED model shown in Fig. 4B. Moreover, in some examples, the TED model used as part of the TLT engine may comprise one or more of: a number of layers of 6, a dimension of attention model of 128, a dimension of feed forward layer of 1024, a number of attention heads of 16, and a dropout rate of 0.2. Furthermore, in some examples, the tokenizer vocabulary size may be 100 for each of English and Farsi. It is also contemplated that in some examples, different values may be used for the parameters of the TED model. In addition, the TED model may also be fine-tuned and trained for different languages such as Levantine Arabic and the like, in which case the parameters of the TED model may be different than those described above in relation to the Farsi language.

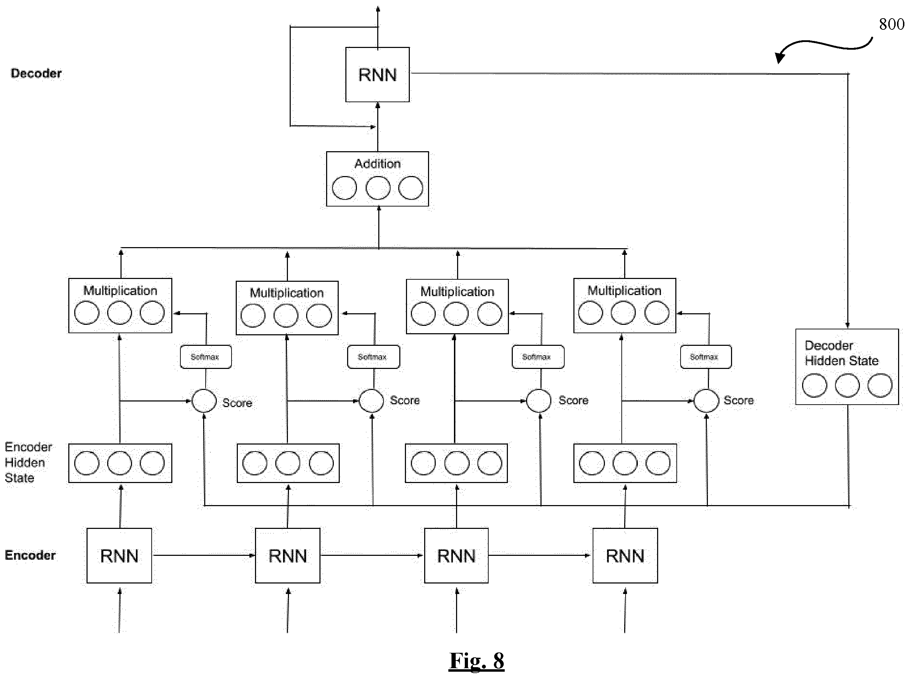

Moreover, in some examples, the TLT engine may comprise a Recurrent Neural Network (RNN) with an attention mechanism. An example of such a model is shown in Fig. 8. Fig. 8 shows a schematic representation of an example machine learning model 800. Machine learning model 800 has an encoder-decoder architecture which first encodes the given sentence written in the source language to a vector space, and then decodes the vectors to the sentence written in the target language. This model comprises a recurrent neural encoder which reads the input sentence token by token. In a RNN encoder unit at each time step traversing the sentence, the model learns to keep some important information from the sentence and to forget some unnecessary parts. The model also comprises the attention layer which receives the output of the encoder at time each time step and also the decoder hidden state. This attention layer is designed to find the relationship between the generated token in the output and each of the tokens in the input. This process happens in an auto regressive manner, meaning that after the generation of each token in the output, the attentions are calculated for the next output token, until an EOS token is generated which represent the end of sentence. Further description of models such as model 800 is set out in Sundemeyer, M, et al "LSTM Neural Networks for Language Modeling" INTERSPEECH 2012 ISCA's 13th Annual Conference, Portland, OR, USA September 9-13, 2012, pages 194-197, which is incorporated herein by reference in its entirety.

At box 575 a determination may be made as to whether the machine translation generated by the trained machine translation model of the TTT engine is to be replaced by the transliteration generated by the TLT engine. In some examples, this determination may comprise extracting at the mobile device one or more features associated with one or more of the machine translation and the transliteration. Once these features are extracted, then a determination may be made as to whether the machine translation is to be replaced by the transliteration. This determination may be made using a selection engine (SEL engine) based on the one or more features. The SEL engine may be onboard the mobile device.

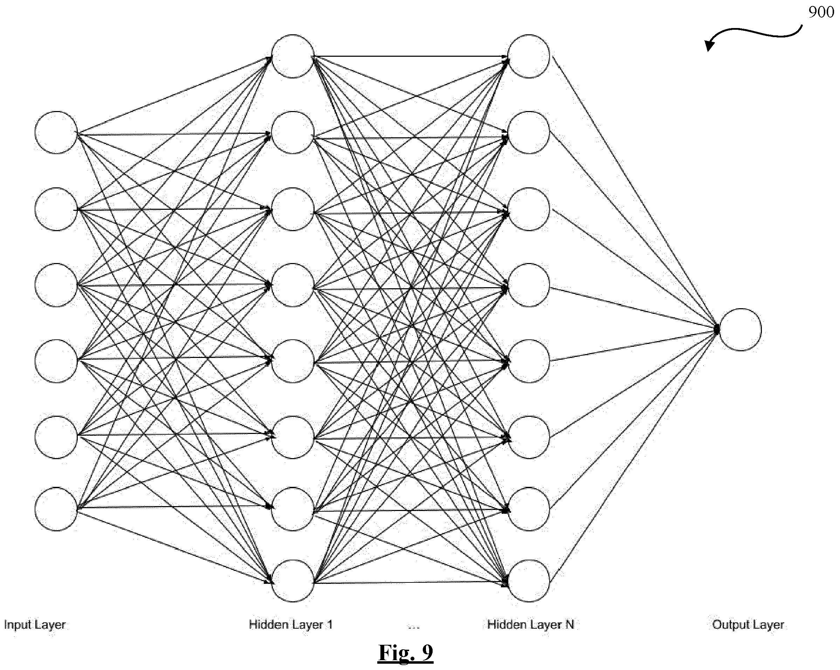

In some examples, the SEL engine may comprise a binary classifier receiving as input the one or more features. In some examples, the binary classifier may be trained with the training objective of minimizing the Levenshtein distance between a reference word (from a training dataset) and the output of the binary classifier. Fig. 9 shows a schematic representation of an example neural network 900 which may be used to implement the binary classifier of the SEL engine. Neural network 900 comprises a feed forward neural network with four layers (one input layer, two hidden layers, and one output layer). The first input layer has six neurons which corresponds to the number of features extracted from the output of the machine translation and transliteration models. The neuron in the last layer is equipped with a sigmoid function to calculate the probability of using the transliteration versus the machine translation. Some example features that may be extracted to be fed into the input layer are described in the following.

While Fig. 9 shows four layers, it is contemplated that in some examples the neural network may comprise additional hidden layers. Moreover, in some examples, the number of features used as inputs to the neural network may be different than six. In such examples, the input layer may have a corresponding number of neurons that may also be different than six.

In some examples, an example feature to be extracted associated with the one or more of the machine translation and the transliteration may include the Levenshtein distance between the machine translation and the transliteration of the proper noun. Another example feature may include the absolute value of the difference between the length of the machine translation and the length of the transliteration. The length in this context may refer to the number of characters in the strings that comprise the machine translation and the transliteration. Moreover, in some examples, the length of the string may also include spaces or special characters (such as dashes and the like) in cases where the machine translation or the transliteration include spaces or special characters.

Another example feature may include the decoder confidence of the trained machine translation model used to generate the machine translation. In some examples, an absolute pseudoconfidence may be computed by dividing (the confidence associated with word i) by (the confidence associated with word i-1). Yet another example feature may include the name entity recognition tag for the proper noun. In some examples, this tag may comprise name of person, name of place, name of organization, and the like. Moreover, in some examples, this tag may be generated by the NER engine.

Yet another example feature may include contextual information associated with the proper noun. An example of such contextual information may include the sentence within which the proper noun is found, and the like. Moreover, another example feature may include the frequency of the machine translation and the transliteration appearing in a large corpus. It is contemplated that in some examples other features may also be extracted and used as the input to the classifier to choose between the machine translation and the transliteration. In some examples, these features may be extracted by the TTT engine, or by another component of the mobile device.

Referring back to the portion of method 500 shown in Fig. 7, if at box 575 it is determined that the machine translation is not to be replaced by the transliteration, method 500 moves to box 580. If the machine translation is not to be replaced by the transliteration, then the translated text data may be generated by removing the first token and the second token from the intermediate text data, as set out in box 585. If, on the other hand, at box 575 it is determined that the machine translation is to be replaced by the transliteration, method 500 moves to box 590. If the machine translation is to be replaced by the transliteration, then the translated text data may be generated by replacing the machine translation with the transliteration in the intermediate text data (box 592) and by removing the first token and the second token from the intermediate text data (box 594). In this manner, method 500 may enhance the ability of the speech-to-speech translation methods described herein to find for a proper noun in a first language an equivalent in the second language.

The description of method 500 references a number of engines such as the TC engine, the NER engine, the TLT engine, and the SEL engine. It is contemplated that in some examples these engines may be part of the TTT engine. In other words, it is contemplated that in some examples, the TTT engine may comprise one or more of the TC engine, the NER engine, the TLT engine, and the SEL engine.

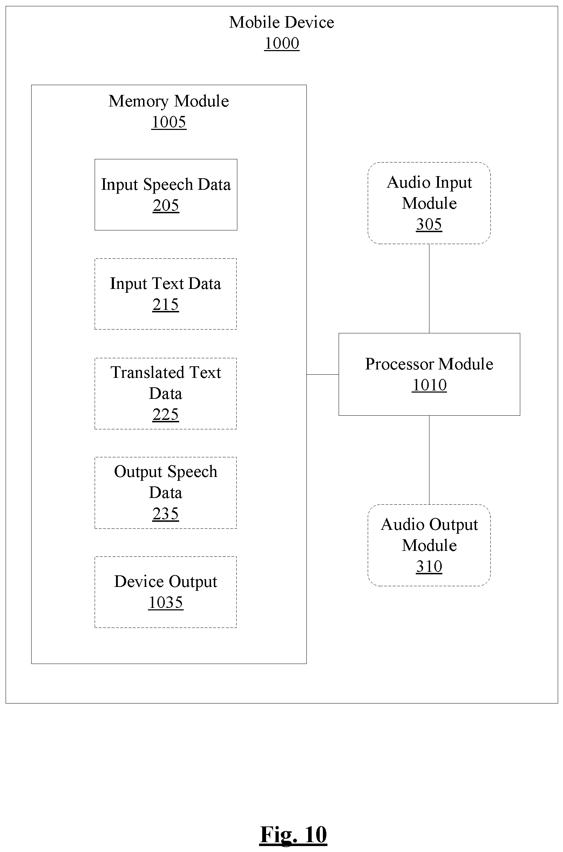

Turning now to Fig. 10, a schematic representation is shown of an example mobile device 1000. Mobile device 1000 may be similar to mobile devices 200 and 300. Mobile device 1000 comprises a memory module 1005 to store input speech data 205 associated with speech in a first language. Memory module 1005 may comprise a non-transitory machine-readable storage medium that may be any electronic, magnetic, optical, or other physical storage device that stores executable instructions. The machine-readable storage medium may include, for example, random access memory (RAM), read-only memory (ROM), electrically-erasable programmable read-only memory (EEPROM), flash memory, a storage drive, an optical disc, and the like. The machine-readable storage medium may be encoded with executable instructions.

In some examples, memory module 1005 comprises one non-transitory machine-readable storage medium. It is also contemplated that in some examples, memory module 1005 may comprise two or more non-transitory machine-readable storage media.

Mobile device 1000 may also comprise a processor module 1010 in communication with memory module 1005. Processor module 1010 may comprise a central processing unit (CPU), a graphics processing unit (GPU), a microcontroller, a microprocessor, a processing core, a fieldprogrammable gate array (FPGA), a multi-core processor, or similar device capable of executing instructions. Processor module 1010 may cooperate with the memory module 1005 to execute instructions.

In some examples, processor module 1010 may comprise one processor. It is also contemplated that in some examples, processor module 1010 may comprise two or more processors.

Similar to mobile devices 200 300, mobile device 1000 may perform speech-to-speech translation. For example, mobile device 1000 may perform method 100, method 500, and the other methods described herein. It is also contemplated that mobile device 1000 may perform methods other than method 100, method 500, and the other methods described herein.

Processor module 1010 may receive input speech data 205. In addition, processor module 1010 may convert input speech data 205 into input text data 215 using a STT engine onboard mobile device 1000. Moreover, processor module 1010 may translate input text data 215 to form translated text data 225 using a TTT engine onboard mobile device 1000. Translated text data 225 may be associated with a second language.

Processor module 1010 may also convert translated text data 225 into output speech data 235 using a TTS engine onboard mobile device 1000. In addition, processor module 1010 may output a device output 1035 based on output speech data 235. In some examples, device output 1035 may comprise data such as output speech data 235. Moreover, in some examples, device output 1035 may comprise an audio output comprising speech in the second language associated with output speech data 235. It is contemplated that other types of device output 1035 may also be output by mobile device 1000.

To output device output 1035, processor module 1010 may also communicate device output 1035 to an output terminal such as a speaker, a display or a printer, or may communicate device output 1035 to another component of mobile device 1000 or outside of mobile device 1000.

In some examples, mobile device 1000 may also comprise audio input module 305 and audio output module 310. Moreover, in some examples, audio output module 310 may act as an output terminal of mobile device 1000. Furthermore, in some examples, audio input module 305 may comprise a microphone, and the like. Moreover, in some examples, audio output module 310 may comprise a speaker, and the like. In Fig. 10 audio input module 305 and audio output module 310 are shown in dashed lines to indicate that in some examples, mobile device 1000 need not comprise audio input module 305 and audio output module 310. In some such examples, one or more of the audio input module and the audio output module may be external to, and in communication with, mobile device 1000.

In some examples, device output 1035 may comprise an audio output generated by audio output module 310, which audio output may comprise speech in the second language associated with output speech data 235.

In Fig. 10 input text data 215, translated text data 225, output speech data 235, and device output 1035 are shown in dashed lines to signify that while some or all of these entities may be stored in memory module 1005, it is also contemplated that in some examples some or all of these entities may be stored in a different memory in mobile device 1000. In addition, mobile device 1000 may have the features and perform the functions of method 100, method 500, and the other methods described herein. In addition, mobile device 1000 may have features and perform functions other than those of method 100, method 500, and the other methods described herein.

As discussed above, in some examples, mobile device 1000 may comprise audio input module 305 to receive an audio input corresponding to speech in first language, and convert the audio input into input speech data 205. Moreover, in some examples, mobile device 1000 may comprise audio output module 310. To output the device output 1035 processor module 1010 may control audio output module 310 to generate an audio output comprising corresponding speech in the second language associated with output speech data 235.

As discussed in relation to mobile devices 200 and 300, in some examples, mobile device 1000 may comprise a smartphone, a tablet, a wearable device, and the like. Moreover, in some examples, mobile device 1000 may comprise an Android^{™} Edge device, such as an Android^{™} Edge smartphone, and the like. Furthermore, in some examples, the STT engine may comprise a Hybrid Deep Neural Network and a Hidden Markov Model with Time Delay Neural Network (TDNN) layers and bi-directional Long Short-Term Memory (LSTM) layers.

In addition, in some examples, the TTT engine may comprise a Transformers Encoder-Decoder machine translation model, as discussed in relation to method 100 and the other methods described herein. In some examples, one of the first language and the second language may comprises Farsi and the other of the first language and the second language comprises English. The Transformers Encoder-Decoder machine translation model may comprise one or more of: a number of layers of 4, a dimension of attention model of 128, a dimension of feed forward layer 1024, a number of attention heads of 16, and a dropout rate of 0.15.

Furthermore, in some examples, one of the first language and the second language comprises Levantine Arabic and the other of the first language and the second language comprises English. The Transformers Encoder-Decoder machine translation model may comprise one or more of: a number of layers of 4, a dimension of attention model of 128, a dimension of feed forward layer of 2048, a number of attention heads of 8, and a dropout rate of 0.15.

Moreover, in some examples, the TTT engine may comprise the Transformers Encoder-Decoder machine translation model compressed using TFLite^{™} to form a compressed Transformers Encoder-Decoder machine translation model storable onboard the mobile device. In some examples, the compressed version of the model may be storable in memory module 1005 or in other storage onboard mobile device 1000.

In some examples, the TTS engine may comprise trained machine learning models comprising Tacotron2^{™} and Fastspeech2^{™}. Furthermore, in some examples, processor module 1010 may receive user input at mobile device 1000 in relation to one or more of translated text data 225 and output speech data 235, and may send the user input to a retraining module to retrain one or more of the STT engine, the TTT engine, and the TTS engine based on the user input. This retraining functionality may be similar to the corresponding functionality described in relation to method 100 and the other methods described herein.

In addition, in some examples, mobile device 1000 may implement the functions and features associated with method 500 in relation to proper nouns. For example, processor module 1010 may truecase input text data 215 associated with a sentence using a truecasing engine (TC engine) onboard mobile device 1000, and find a proper noun in the sentence using a Name Entity Recognition engine (NER engine) onboard mobile device 1000. Processor module 1010 may also generate updated input text data associated with an updated sentence comprising a first token inserted into the sentence immediately before the proper noun and a second token inserted into the sentence immediately after the proper noun.

In addition, processing module 1010 may translate the updated input text data to form intermediate translated text data using the TTT engine, and determine whether a dictionary translation of the proper noun is stored onboard mobile device 1000. In some examples, this dictionary translation may be stored in memory module 1005. It is also contemplated that in some examples, the dictionary translation may be stored onboard mobile device 1000 outside of memory module 1005.

If the dictionary translation of the proper noun is stored onboard the mobile device, processor module 1010 may locate a machine translation of the proper noun in the intermediate translated text data based on the first token and the second token, and compare the dictionary translation of the proper noun with the machine translation of the proper noun. If the dictionary translation is different from the machine translation, processor module 1010 may generate translated text data 225 by: replacing the machine translation with the dictionary translation in the intermediate text data, and removing the first token and the second token from the intermediate text data. If, on the other hand, the dictionary translation is the same as the machine translation, processor module 1010 may generate translated text data 225 by removing the first token and the second token from the intermediate text data.

If the dictionary translation of the proper noun is not stored onboard the mobile device, processor module 1010 may locate the machine translation of the proper noun in the intermediate translated text data based on the first token and the second token, and generate a transliteration of the proper noun using a transliteration engine (TLT engine) onboard mobile device 1000. Processor module 1010 may then determine if the machine translation is to be replaced by the transliteration. If the machine translation is to be replaced by the transliteration, processor module 1010 may generate the translated text data by: replacing the machine translation with the transliteration in the intermediate text data, and removing the first token and the second token from the intermediate text data. If the machine translation is not to be replaced by the transliteration, processor module 1010 may generate translated text data 225 by removing the first token and the second token from the intermediate text data.

In some examples, the TLT engine may comprise one of a Recurrent Neural Network with an attention mechanism and a Transformers Encoder-Decoder machine transliteration model, as discussed in detail in relation to method 500 and Figs. 4 and 8. Furthermore, in some examples, to determine if the machine translation is to be replaced by the transliteration, processor module 1010 may extract one or more features associated with one or more of the machine translation and the transliteration, and determine if the machine translation is to be replaced by the transliteration using a selection engine (SEL engine) based on the one or more features. The SEL engine may be onboard mobile device 1000. In some examples, the SEL engine may comprise a binary classifier, the binary classifier to receive as input the one or more features. Examples of the SEL engine are discussed in greater detail in relation to method 500 and Fig. 9.

In addition, in some examples, processing module 1010 may comprise one or more of the STT engine, the TTT engine, and the TTS engine. Moreover, in some examples, the TTT engine may comprise one or more of the TC engine, the NER engine, the TLT engine, and the SEL engine.

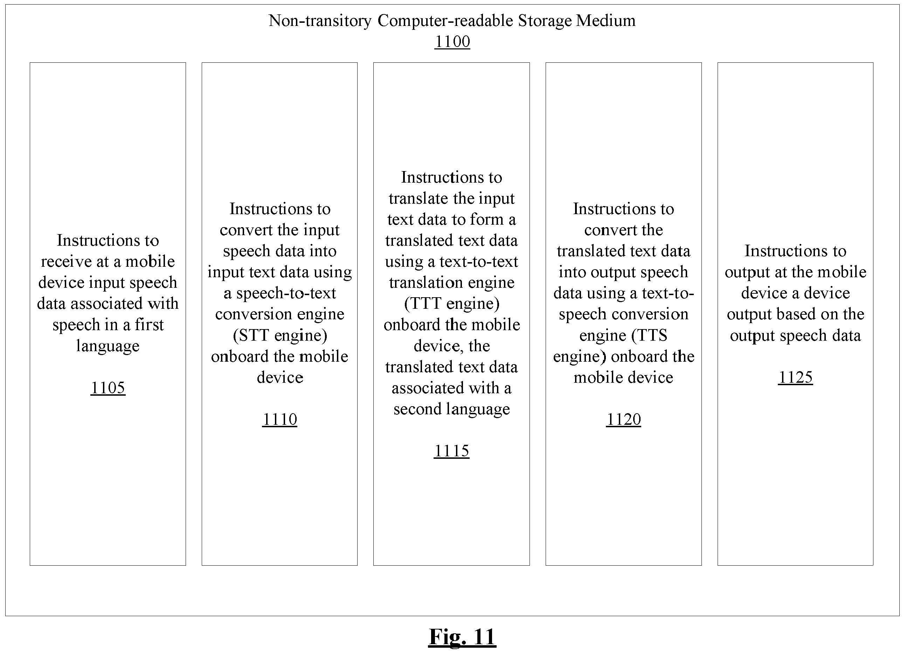

Turning now to Fig. 11, a schematic representation is shown of an example non-transitory computer-readable storage medium (CRSM) 1100, which may comprise an electronic, magnetic, optical, or other physical storage device that stores executable instructions. CRSM 1100 may comprise instructions executable by a processor. The instructions may comprise instructions 1105 to cause the processor to receive at a mobile device input speech data associated with speech in a first language.

In addition, the instructions may comprise instructions 1110 to convert the input speech data into input text data using a STT engine onboard the mobile device. Moreover, the instructions may comprise instructions 1115 to translate the input text data to form a translated text data using a TTT engine onboard the mobile device. The translated text data may be associated with a second language. Furthermore, the instructions may comprise instructions 1120 to convert the translated text data into output speech data using a TTS engine onboard the mobile device. The instructions may also comprise instructions 1125 to output at the mobile device a device output based on the output speech data. In addition, it is contemplated that in some examples, CRSM 1100 may comprise instructions to cause a processor to perform the functions associated with method 100, method 500, and the other methods and devices described herein.

Throughout this specification and the appended claims, infinitive verb forms are often used. Examples include, without limitation: "to generate," "to perform," "to store," "to output," and the like. Unless the specific context requires otherwise, such infinitive verb forms are used in an open, inclusive sense, that is as "to, at least, generate," to, at least, perform," "to, at least, store," and so on.

The above description of illustrated example implementations, including what is described in the Abstract, is not intended to be exhaustive or to limit the implementations to the precise forms disclosed. Although specific implementations of and examples are described herein for illustrative purposes, various equivalent modifications can be made without departing from the spirit and scope of the disclosure, as will be recognized by those skilled in the relevant art. Moreover, the various example implementations described herein may be combined to provide further implementations.

In general, in the following claims, the terms used should not be construed to limit the claims to the specific implementations disclosed in the specification and the claims, but should be construed to include all possible implementations along with the full scope of equivalents to which such claims are entitled. Accordingly, the claims are not limited by the disclosure.

## Claims

1. A method of speech-to-speech translation comprising:
receiving at a mobile device input speech data associated with speech in a first language;
converting the input speech data into input text data using a speech-to-text conversion engine (STT engine) onboard the mobile device;
translating the input text data to form a translated text data using a text-to-text translation engine (TTT engine) onboard the mobile device, the translated text data associated with a second language;
converting the translated text data into output speech data using a text-to-speech conversion engine (TTS engine) onboard the mobile device; and
outputting at the mobile device a device output based on the output speech data.

2. The method of claim 1, further comprising:
receiving at the mobile device an audio input corresponding to the speech in the first language; and
converting, at the mobile device, the audio input into the input speech data.

3. The method of any one of claims 1 to 2, wherein the outputting the device output comprises outputting an audio output at the mobile device, the audio output comprising corresponding speech in the second language associated with the output speech data.

4. The method of any one of claims 1 to 3, wherein
the mobile device comprises one of a smartphone, a tablet, and a wearable device; and/or
the mobile device comprises the smartphone being an Android^{™} Edge device.

5. The method of any one of claims 1 to 4, wherein:
the converting the input speech data into the input text data comprises converting the input speech data into the input text data using the STT engine comprising:
a Hybrid Deep Neural Network and a Hidden Markov Model with Time Delay Neural Network (TDNN) layers and bi-directional Long Short-Term Memory (LSTM) layers; and/or
the converting the translated text data into the output speech data comprises converting the translated text data into the output speech data using the TTS engine comprising:
trained machine learning models comprising Tacotron2^{™} and Fastspeech2^{™}; and/or
the translating comprises translating the input text data to form the translated text data using the TTT engine comprising:
a Transformers Encoder-Decoder machine translation model.

6. The method of claim 5, wherein:
one of the first language and the second language comprises Farsi and the other of the first language and the second language comprises English; and
the translating comprising translating the input text data to form the translated text data using the Transformers Encoder-Decoder machine translation model comprising one or more of:
a number of layers of 4, a dimension of attention model of 128, a dimension of feed forward layer of 1024, a number of attention heads of 16, and a dropout rate of 0.15.

7. The method of claim 5, wherein:
one of the first language and the second language comprises Levantine Arabic and the other of the first language and the second language comprises English; and
the translating comprising translating the input text data to form the translated text data using the Transformers Encoder-Decoder machine translation model comprising one or more of:
a number of layers of 4, a dimension of attention model of 128, a dimension of feed forward layer of 2048, a number of attention heads of 8, and a dropout rate of 0.15.

8. The method of any one of claims 5 to 7, wherein the translating comprises translating the input text data to form the translated text data using the TTT engine comprising:
the Transformers Encoder-Decoder machine translation model compressed using TFLite ^{™} to form a compressed Transformers Encoder-Decoder machine translation model storable onboard the mobile device.

9. The method of any one of claims 1 to 8, wherein the translating comprises:
truecasing the input text data associated with a sentence using a truecasing engine (TC engine) onboard the mobile device;
finding a proper noun in the sentence using a Name Entity Recognition engine (NER engine) onboard the mobile device;
generating at the mobile device updated input text data associated with an updated sentence comprising a first token inserted into the sentence immediately before the proper noun and a second token inserted into the sentence immediately after the proper noun;
translating the updated input text data to form intermediate translated text data using the TTT engine;
determining whether a dictionary translation of the proper noun is stored onboard the mobile device;
if the dictionary translation of the proper noun is stored onboard the mobile device:
locating a machine translation of the proper noun in the intermediate translated text data based on the first token and the second token;
comparing the dictionary translation of the proper noun with the machine translation of the proper noun; and
if the dictionary translation is different from the machine translation, generating the translated text data by:
replacing the machine translation with the dictionary translation in the intermediate text data; and
removing the first token and the second token from the intermediate text data;
if the dictionary translation is the same as the machine translation, generating the translated text data by:
removing the first token and the second token from the intermediate text data; and
if the dictionary translation of the proper noun is not stored onboard the mobile device:
locating the machine translation of the proper noun in the intermediate translated text data based on the first token and the second token;
generating a transliteration of the proper noun using a transliteration engine (TLT engine) onboard the mobile device;
determining if the machine translation is to be replaced by the transliteration;
if the machine translation is to be replaced by the transliteration, generating the translated text data by:
replacing the machine translation with the transliteration in the intermediate text data; and
removing the first token and the second token from the intermediate text data; and
if the machine translation is not to be replaced by the transliteration, generating the translated text data by:
removing the first token and the second token from the intermediate text data.

10. The method of claim 9, wherein:
the generating the transliteration comprises generating the transliteration using the TLT engine comprising one of:
a Recurrent Neural Network with an attention mechanism; and
a Transformers Encoder-Decoder machine transliteration model; and/or
the determining if the machine translation is to be replaced by the transliteration comprises:
extracting at the mobile device one or more features associated with one or more of the machine translation and the transliteration; and
determining if the machine translation is to be replaced by the transliteration using a selection engine (SEL engine) based on the one or more features, the SEL engine onboard the mobile device.

11. The method of any one of claims 1 to 10, further comprising:
adding punctuation to at least a portion of the input text data using a punctuator engine onboard the mobile device before the translating the input text data using the TTT engine.

12. A mobile device for speech-to-speech translation, the mobile device comprising:
a memory module to store input speech data associated with speech in a first language; and
a processor module in communication with the memory module, the processor module to:
receive the input speech data;
convert the input speech data into input text data using a speech-to-text conversion engine (STT engine) onboard the mobile device;
translate the input text data to form a translated text data using a text-to-text translation engine (TTT engine) onboard the mobile device, the translated text data associated with a second language;
convert the translated text data into output speech data using a text-to-speech conversion engine (TTS engine) onboard the mobile device; and
output a device output based on the output speech data.

13. The mobile device of claim 12, further comprising:
an audio input module to:
receive an audio input corresponding to the speech in the first language; and
convert the audio input into the input speech data; and/or
an audio output module;
wherein to output the device output the processor module is to control the audio output module to generate an audio output comprising corresponding speech in the second language associated with the output speech data.

14. The mobile device of any one of claims 12 to 13, wherein:
the mobile device comprises one of a smartphone, a tablet, and a wearable device; and/or
the mobile device comprises the smartphone being an Android^{™} Edge device.

15. The mobile device of any one of claims 12 to 14, wherein:
the STT engine comprises:
a Hybrid Deep Neural Network and a Hidden Markov Model with Time Delay Neural Network (TDNN) layers and bi-directional Long Short-Term Memory (LSTM) layers; and/or
the TTT engine comprises:
a Transformers Encoder-Decoder machine translation model; and/or the TTS engine comprises:
trained machine learning models comprising Tacotron2^{™} and Fastspeech2^{™}.

16. The mobile device of claim 15, wherein:
one of the first language and the second language comprises Farsi and the other of the first language and the second language comprises English; and
the Transformers Encoder-Decoder machine translation model comprises one or more of:
a number of layers of 4, a dimension of attention model of 128, a dimension of feed forward layer of 1024, a number of attention heads of 16, and a dropout rate of 0.15.

17. The mobile device of claim 15, wherein:
one of the first language and the second language comprises Levantine Arabic and the other of the first language and the second language comprises English; and
the Transformers Encoder-Decoder machine translation model comprises one or more of:
a number of layers of 4, a dimension of attention model of 128, a dimension of feed forward layer of 2048, a number of attention heads of 8, and a dropout rate of 0.15.

18. The mobile device of any one of claims 15 to 17, wherein the TTT engine comprises:
the Transformers Encoder-Decoder machine translation model compressed using TFLite ^{™} to form a compressed Transformers Encoder-Decoder machine translation model storable onboard the mobile device.

19. The mobile device of any one of claims 12 to 18, wherein to translate the input text data the processor module is to:
truecase the input text data associated with a sentence using a truecasing engine (TC engine) onboard the mobile device;
find a proper noun in the sentence using a Name Entity Recognition engine (NER engine) onboard the mobile device;
generate updated input text data associated with an updated sentence comprising a first token inserted into the sentence immediately before the proper noun and a second token inserted into the sentence immediately after the proper noun;
translate the updated input text data to form intermediate translated text data using the TTT engine;
determine whether a dictionary translation of the proper noun is stored onboard the mobile device;
if the dictionary translation of the proper noun is stored onboard the mobile device:
locate a machine translation of the proper noun in the intermediate translated text data based on the first token and the second token;
compare the dictionary translation of the proper noun with the machine translation of the proper noun; and
if the dictionary translation is different from the machine translation, generate the translated text data by:
replacing the machine translation with the dictionary translation in the intermediate text data; and
removing the first token and the second token from the intermediate text data;
if the dictionary translation is the same as the machine translation, generate the translated text data by:
removing the first token and the second token from the intermediate text data; and
if the dictionary translation of the proper noun is not stored onboard the mobile device:
locate the machine translation of the proper noun in the intermediate translated text data based on the first token and the second token;
generate a transliteration of the proper noun using a transliteration engine (TLT engine) onboard the mobile device;
determine if the machine translation is to be replaced by the transliteration;
if the machine translation is to be replaced by the transliteration, generate the translated text data by:
replacing the machine translation with the transliteration in the intermediate text data; and
removing the first token and the second token from the intermediate text data; and
if the machine translation is not to be replaced by the transliteration, generate the translated text data by:
removing the first token and the second token from the intermediate text data.

20. The mobile device of claim 19, wherein:
the TLT engine comprises one of:
a Recurrent Neural Network with an attention mechanism; and
a Transformers Encoder-Decoder machine transliteration model; and/or
to determine if the machine translation is to be replaced by the transliteration the processor module is to:
extract one or more features associated with one or more of the machine translation and the transliteration; and
determine if the machine translation is to be replaced by the transliteration using a selection engine (SEL engine) based on the one or more features, the SEL engine onboard the mobile device.

21. The mobile device of any one of claims 12 to 20, wherein the processor module is further to:
add punctuation to at least a portion of the input text data using a punctuator engine onboard the mobile device before the translating the input text data using the TTT engine.

22. A non-transitory computer-readable storage medium comprising instructions executable by a processor, the instructions to cause the processor to perform the methods of any one of claims 1 to 11.
